# EUROPEAN PATENT APPLICATION

(11) **EP 1 750 262 A1**
(43) Date of publication of application: **07.02.2007**
(21) Application number: 05738656.7
(22) Date of filing: 12.05.2005
(51) Int. Cl.: G11B 20/10, G11B 20/12, G11B 27/00, G11B 27/034

(54) **RECORDING DEVICE AND METHOD, RECORDING MEDIUM, AND PROGRAM**

(30) Priority: 28.05.2004 JP 2004159707
(71) Applicant: SONY CORPORATION, Tokyo 141-0001 (JP)
(72) Inventor: YAMADA, Makoto, Shinagawa-ku, Tokyo 1410001 (JP); SATO, Takayuki, Shinagawa-ku, Tokyo 1410001 (JP); OBATA, Hideo, Shinagawa-ku, Tokyo 1410001 (JP); TADOKORO, Eiji, Shinagawa-ku, Tokyo 1410001 (JP); NAGAO, Yoshito, Shinagawa-ku, Tokyo 1410001 (JP); SHIMONO, Hiroshi, Shinagawa-ku, Tokyo 1410001 (JP)
(74) Representative: Jackson, Jonathan Andrew
(86) International application number: PCT/JP2005/008700
(87) International publication number: WO 2005/117010

(57) **Abstract**

The present invention relates to a recording apparatus and method, a storage medium and a program which allow data for a predetermined playback time to be recorded in a contiguous area on the data storage medium, even when an area in which data cannot be recorded exists on the data storage medium. While a stream unit for a predetermined playback time is being recorded on a storage medium 102, when a recording error occurs, a controller 138 searches for a contiguous blank area greater than the recording capacity of a contiguous recording area in which the stream unit is being recorded. Under the control of the controller 138, a drive 136 secures, in the beginning of the found area, an area having the same capacity as the data amounts of an IL auxiliary area and a recorded stream unit, records an unrecorded stream unit, and then copies the recorded stream unit. The present invention is applicable to video cameras.

## Description

### Technical Field

The present invention relates to recording apparatuses and methods, storage media, and programs. In particular, the present invention relates to a recording apparatus and method, a storage medium, and a program which allow data to be recorded in s contiguous area on a data storage medium.

### Background Art

In recent years, for example, a system that makes it possible to play back, without interruption, data (hereinafter referred to "AV data") obtained by multiplexing video data, obtained by a video camera, and audio data, collected by a microphone included in a video camera, has been proposed as data recording systems for video cameras. In the system, the AV data is divided into multiple pieces of data, each having a predetermined playback time (hereinafter referred to as "division time"), which is about 10 to 20 seconds. One piece of the divided data (the piece of data will hereinafter be referred to as "division data") is recorded in a contiguous area on a storage medium. Further, for each piece of the division data, an area (hereinafter referred to as an "auxiliary area") in which content data, such as audio data, image data, and/or text data, that is to be played back in synchronization with the division data is additionally recorded is pre-secured.

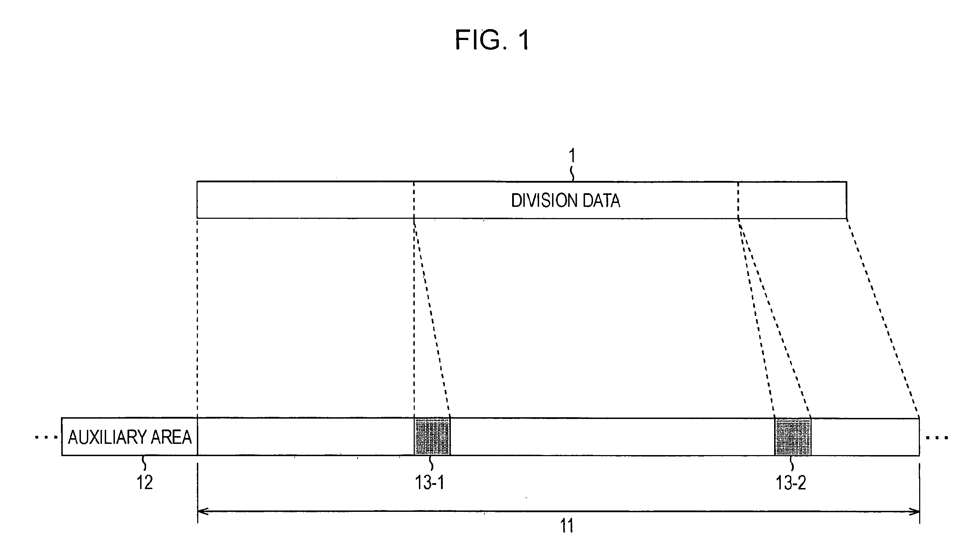

FIG. 1 is a diagram schematically illustrating the recording format of a storage medium, such as an optical disk, based on the above-described recording system. In this recording system, division data 1 is recorded in a contiguous area 11 on a storage medium and an auxiliary area 12 having a predetermined capacity is secured. In this recording system, when defective areas 13-1 and 13-2 in which data cannot be recorded exist in the area 11 due to a scratch or dust on the storage medium, the defective areas are skipped to continue the recording of the division data 1.

A recording apparatus for efficiently using a recording area has also been proposed (e.g., refer to Patent Document 1). In the recording apparatus, the recording area is divided depending on the type of data to be recorded and data is recorded with a different cluster size depending on the type of data or the recording mode. When a defect is detected in the recording area, the type of data to be recorded in a cluster containing the defect is changed.
[Patent Document 1] Japanese Unexamined Patent Application Publication No. 2000-149427

### Disclosure of Invention

### Problems to be Solved by the Invention

In the recording system, however, when the rate of defective areas in the area 11 exceeds a predetermined value to make it impossible to record the division data 1 in the contiguous area 11, the recording of AV data is suspended or the next division data is recorded without recording the rest of the division data 1 that has become unrecordable in the area 11.

A method in which a buffer that is sufficiently larger than the data amount of division data 1 is provided is also possible. In this method, the division data 1 is stored in the buffer until the recording of the division data 1 is completed, and when the rate of defective areas in the area 11 exceeds a predetermined value to make it impossible to record the division data 1 in the contiguous area 11, the division data 1 is recorded in another contiguous area from the beginning thereof. In such a case, however, there is a problem in that an increase in the recording capacity of the buffer increases the cost for recording apparatuses, such as video camera, and increases the size of the recording apparatuses.

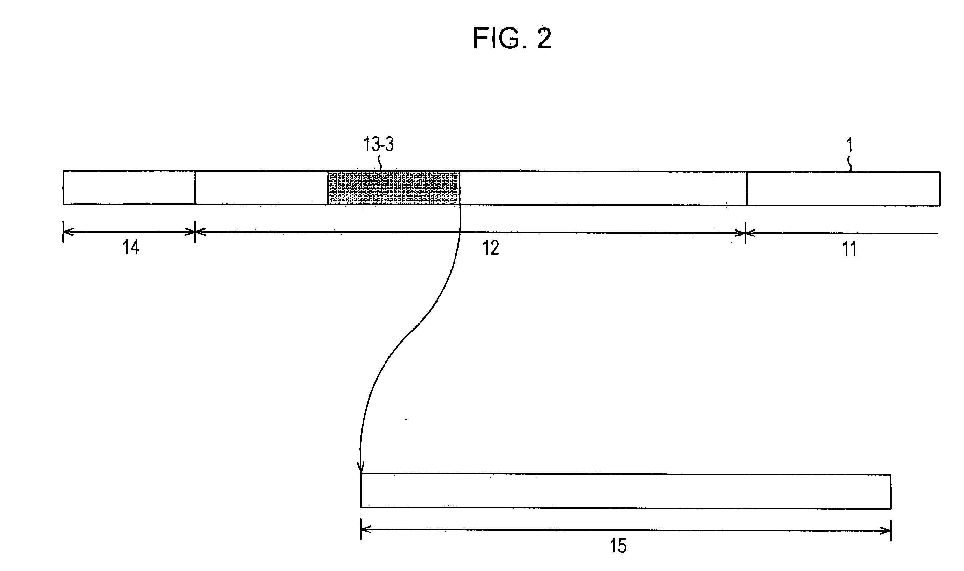

As shown in FIG. 2, the division data 1 is recorded in an area 11 immediately after an auxiliary area 12 secured as an area having a predetermined recording capacity when the division data 1 is recorded, and other data is recorded in an area 14 immediately before the auxiliary area 12. Accordingly, there is a problem. Specifically, while content data to be played back in synchronization with the division data 1 is recorded in the auxiliary area 12, the content data becomes unrecordable therein, since the recording capacity of the auxiliary area 12 cannot be expanded even if a defective area 13-3 is detected.

From a point when the defective area 13-3 is detected, the content data to be recorded in the auxiliary area 12 may be recorded in another area 15. In such a method, however, since the content data is recorded in distributed areas, there is a problem in that the playback of the content data to be played back in synchronization with the division data 1 may be suspended during the playback of the division data 1.

The invention described in Patent Document 1 discloses a technology in which when a defect is detected in a recording area, no data is recorded in a cluster containing the defect, but does not disclose processing when data for a predetermined playback time cannot be recorded in a contiguous area on the data storage medium.

The present invention has been made in view of such situations. Even when a data storage medium has an area in which data cannot be recorded, the present invention allows data for a predetermined playback time to be recorded in a contiguous area on the data storage medium.

### Means for Solving the Problems

A first recording apparatus of the present invention is directed to a recording apparatus for recording pieces of division data each having a predetermined playback time, the division data being obtained by dividing AV (audio visual) data obtained by multiplexing video data and audio data, in contiguous areas on a data storage medium. The recording apparatus includes searching means for searching for, when the division data is being recorded in a first contiguous area of the contiguous areas and the division data becomes unrecordable in the first contiguous area, a second contiguous area, which is a blank area greater than or equal to a recording capacity of the first contiguous area; and recording controlling means for controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

The recording apparatus can further include information generating means for generating area information containing positions and recording capacities of the contiguous areas and for updating the position and the recording capacity of the first contiguous area, the position and recording capacity being contained in the area information, to the position and the recording capacity of the second contiguous area, when the division data is recorded in the second contiguous area.

The data storage medium is a data storage medium on which, for each contiguous area, a content-data recording area for additionally recording content data to be played back in synchronization with playback of the division data recorded in the contiguous area is secured adjacent to the contiguous area, the content-data recording area having a predetermined recording capacity. When the content data to be played back in synchronization with the playback of the division data recorded in a forth contiguous area of the contiguous areas is being recorded in a first content-data recording area of the content-data recording areas and the content data becomes unrecordable in the first content-data recording area, the searching means can search for a fifth contiguous area, which is a blank area greater than or equal to a recording capacity of the fourth contiguous area, and a second content-data recording area, which is a blank area adjacent to the fifth contiguous area and greater than or equal to a recording capacity of the first content-data recording area. The recording controlling means can control recording of the division data into the fifth contiguous area and recording of the content data into the second content-data recording area so that a third content-data recording area having a recording capacity equal to a data amount of third data contained in the content data and recorded in the first content-data recording area is secured in the beginning of the second content-data recording area, fourth data contained in the content data and unrecorded in the first content-data recording area is recorded immediately after the third content-data recording area, the third data is then recorded in the third content-data recording area, and the division data recorded in the fourth contiguous area is recorded in the fifth contiguous area.

The recording apparatus can further include information generating means. When the division data is recorded in the fifth contiguous area and the content data is recorded in the second content-data recording area, the information generating means generates area information containing positions and recording capacities of the contiguous areas and the content-data recording areas and updates the positions and the recording capacities of the forth contiguous area and the first content-data recording area, the positions and the recording capacities being contained in the area information, to the positions and the recording capacities of the fifth contiguous area and the second content-data recording area.

A first recording method of the present invention is directed to a recording method for recording pieces of division data each having a predetermined playback time, the division data being obtained by dividing AV (audio visual) data obtained by multiplexing video data and audio data, in contiguous areas on a data storage medium. The recording method includes a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

A first program recorded on a storage medium of the present invention is directed to a recording-processing program for recording pieces of division data each having a predetermined playback time, the division data being obtained by dividing AV (audio visual) data obtained by multiplexing video data and audio data, in contiguous areas on a data storage medium. The program includes a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

A first program of the present invention is directed to a program for causing a computer to perform recording processing for recording pieces of division data each having a predetermined playback time, the division- data being obtained by dividing AV (audio visual) data obtained by multiplexing video data and audio data, in contiguous areas on a data storage medium. The program includes a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

A second recording apparatus of the present invention is directed to a recording apparatus that records content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area. The recording apparatus includes searching means for searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and recording controlling means for controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

The recording apparatus can further include information generating means for generating area information containing positions and recording capacities of the contiguous areas and the content-data recording areas and for updating the positions and the recording capacities of the first contiguous area and the first content-data recording area, the positions and the recording capacities being contained in the area information, to the positions and the recording capacities of the second contiguous area and the second content-data recording area, when the division data is recorded in the second contiguous area and the content data is recorded in the second content-data recording area.

A second recording method of the present invention is directed to a recording method for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area. The recording method includes a searching step of searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

A second program recorded on the storage medium of the present invention is directed to a recording-processing program for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area. The program includes a searching step of searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

A second program of the present invention is directed to a program for causing a computer to perform recording processing for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area. The program includes a searching step of searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

In the first recording apparatus and method, the first storage medium, and the first program, while division data having a predetermined playback time, the division data being obtained by dividing AV (audio visual) data obtained by multiplexing video data and audio data, is recorded in a first contiguous area of contiguous areas on a storage medium, when the division data becomes unrecordable in the first contiguous area, a second contiguous area that is a blank area greater than or equal to a recording capacity of the first contiguous area is searched for. Further, the recording of the division data into the second contiguous area is controlled so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

In the sec-ond recording apparatus and method, the second storage medium, and the second program, pieces of division data each having a predetermined playback time, the division data being obtained by dividing AV (audio visual) data obtained by multiplexing video data and audio data, are recorded in contiguous areas on a data storage medium and, for each contiguous area, a content-data recording area having a predetermined recording capacity for additionally recording the content data is secured adjacent to the contiguous area, the content data being played back in synchronization with playback of the division data recorded in the contiguous area. When the content data to be played back in synchronization with the playback of the division data recorded in a first contiguous area of the contiguous areas becomes unrecordable in the first content-data recording area, a second contiguous area and a second content-data recording area are searched for. The second contiguous area is a blank area greater than or equal to a recording capacity of the first contiguous area, and a second content-data recording area is a blank area adjacent to the second contiguous area and greater than or equal to a recording capacity of the first content-data recording area. Further, the recording of the division data into the second contiguous area and the recording of the content data into the second content-data recording area are controlled so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

### Advantages

As described above, according to the recording apparatus and method, the storage medium, and the program of the present invention, data for a predetermined playback time can be recorded in a contiguous area on a data storage medium. According to the recording apparatus and method, the storage medium, and the program of the present invention, even when an area in which data cannot be recorded exists on a data storage medium, data for a predetermined playback time can be recorded in a contiguous area on the data storage medium, without interruption of data recording or occurrence of data loss.

### Brief Description of the Drawings

[FIG. 1] FIG. 1 is a diagram illustrating a method for data recording performed by a conventional recording apparatus.
[FIG. 2] FIG. 2 is a diagram illustrating the method for data recording performed by the conventional recording apparatus.
[FIG. 3] FIG. 3 is a block diagram showing the configuration of one embodiment of a recording/playback apparatus according to the present invention.
[FIG. 4] FIG. 4 is a block diagram showing an example of the functional configuration of the data playback section shown in FIG. 3.
[FIG. 5] FIG. 5 is a block diagram showing one example of a functional configuration achieved by the controller shown in FIG. 3.
[FIG. 6] FIG. 6 is a diagram showing an example of the structure of files recorded on the storage medium shown in FIG. 3.
[FIG. 7] FIG. 7 is a diagram showing an example of the structure of the files recorded on the storage medium shown in FIG. 3.
[FIG. 8] FIG. 8 is a diagram showing an example of the structure of a movie information file recorded on the storage medium shown in FIG. 3.
[FIG. 9] FIG. 9 is a diagram showing an example of the structure of file entries recorded on the storage medium shown in FIG. 3.
[FIG. 10] FIG. 10 is a flow chart illustrating one example of AV-data recording processing performed by the recording/playback apparatus according to the present invention.
[FIG. 11] FIG. 11 is a flow chart illustrating the recording-error handling processing in steps S6 and S11 shown in FIG. 10.
[FIG. 12] FIG. 12 is a diagram illustrating data recording state of the storage medium when a recording error occurred.
[FIG. 13] FIG. 13 is a diagram illustrating the state of an AV-data management track of the movie information file when a recording error occurred.
[FIG. 14] FIG. 14 is a diagram illustrating AV-data recording areas in the recording-error handling processing.
[FIG. 15] FIG. 15 is a diagram illustrating the state of the file entries in the recording-error handling processing.
[FIG. 16] FIG. 16 is a flow chart illustrating the error recovery processing in step S14 shown in FIG. 10.
[FIG. 17] FIG. 17 is a diagram illustrating the state of the file entries in the error recovery processing.
[FIG. 18] FIG. 18 is a diagram illustrating AV-data recording areas in the recording-error handling processing.
[FIG. 19] FIG. 19 is a flow chart illustrating one example of post-recording processing performed by the recording/playback apparatus according to the present invention.
[FIG. 20] FIG. 20 is a diagram illustrating an example of the structure of an audio-data management track in a management track of a movie information file.
[FIG. 21] FIG. 21 is a diagram showing an example of the structure of data of auxiliary-area management samples.
[FIG. 22] FIG. 22 is a diagram illustrating a method for securing an area in which data is to be recorded in an IL auxiliary area.
[FIG. 23] FIG. 23 is a diagram illustrating an example of the structure of a file entry for an audio file.
[FIG. 24] FIG. 24 is a flow chart illustrating the recording-error handling processing in steps S106 and S111 shown in FIG. 19.
[FIG. 25] FIG. 25 is a diagram illustrating the state of the audio-data management track when a recording error occurred.
[FIG. 26] FIG. 26 is a diagram illustrating the recording state of data on the storage medium and the state of the file entries when a recording error occurred.
[FIG. 27] FIG. 27 is a diagram illustrating the recording state of audio data and the state of the file entries in the recording-error handling processing.
[FIG. 28] FIG. 28 is a diagram illustrating audio-data recording areas in the recording-error handling processing.
[FIG. 29] FIG. 29 is a flow chart illustrating the error recovery processing in step S114 shown in FIG. 19.
[FIG. 30] FIG. 30 is a diagram illustrating the state of the file entries in the error recovery processing.
[FIG. 31] FIG. 31 is a block diagram showing an example of the configuration of a personal computer.

### Reference Numerals

101 recording/playback apparatus, 102 storage medium, 113 data recording/playback unit, 131 video processor, 132 audio processor, 133 multiplexer, 134 write buffer, 135 drive interface, 136 drive, 137 data playback section, 138 controller, 151 data-generation controller, 152 information manager, 153 area manager, 154 recording controller, 155 error detector, 156 read controller, 157 data-playback controller, 201 AV file, 211 stream unit, 212 IL auxiliary area, 241 movie information file, 271 AV-data management track, 282 auxiliary-area management sample, 291 offset, 301 file entry, 302 file entry, 311 AD, 321 AD, 501 sample, 511 audio-data management track, 531 sample data amount, 581 file entry, 591 AD, 621 file entry, 631 AD, 801 CPU, 802 ROM, 803 RAM, 808 storage section, 810 drive, 821 removable medium

### Best Mode for Carrying Out the Invention

An embodiment of the present invention will be described below with reference to the drawings.

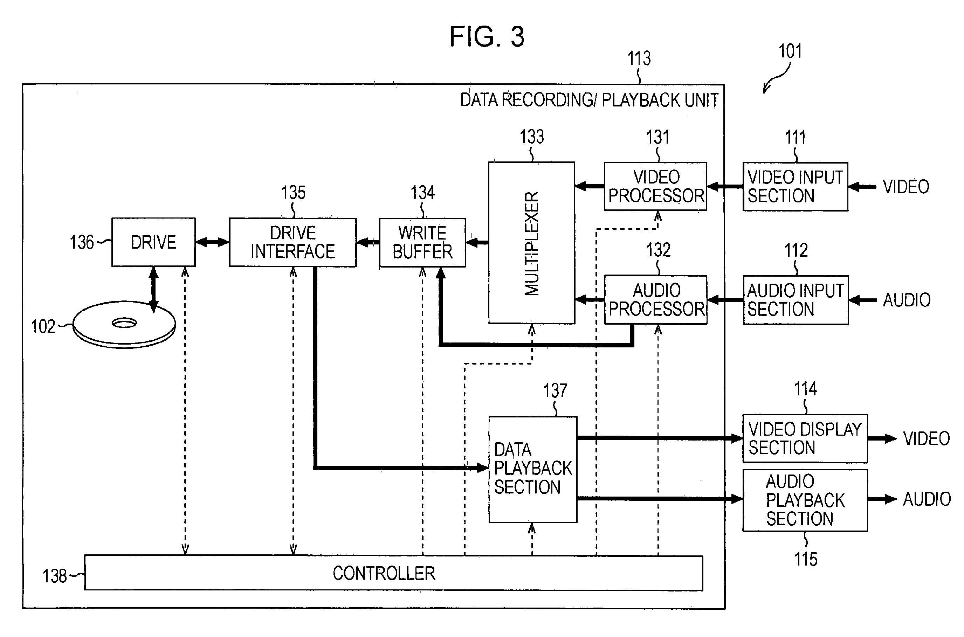

FIG. 3 is a block diagram showing the configuration of one embodiment of a recording/playback apparatus 101 according to the present invention.

The recording/playback apparatus 101 includes a video input section 111, an audio input section 112, a data recording/playback unit 113, a video display section 114, and an audio playback section 115.

The video input section 111 includes a camera, an A/D (analog/digital) converter, and so on. The video input section 111 captures an image of a subject and sends digital video data, obtained by A/D-converting video signals corresponding to the subject, to a video processor 131.

The audio input section 112 includes a microphone, an A/D converter, and so on, and sends digital audio data, obtained by A/D-converting audio signals of collected sound, to an audio processor 132.

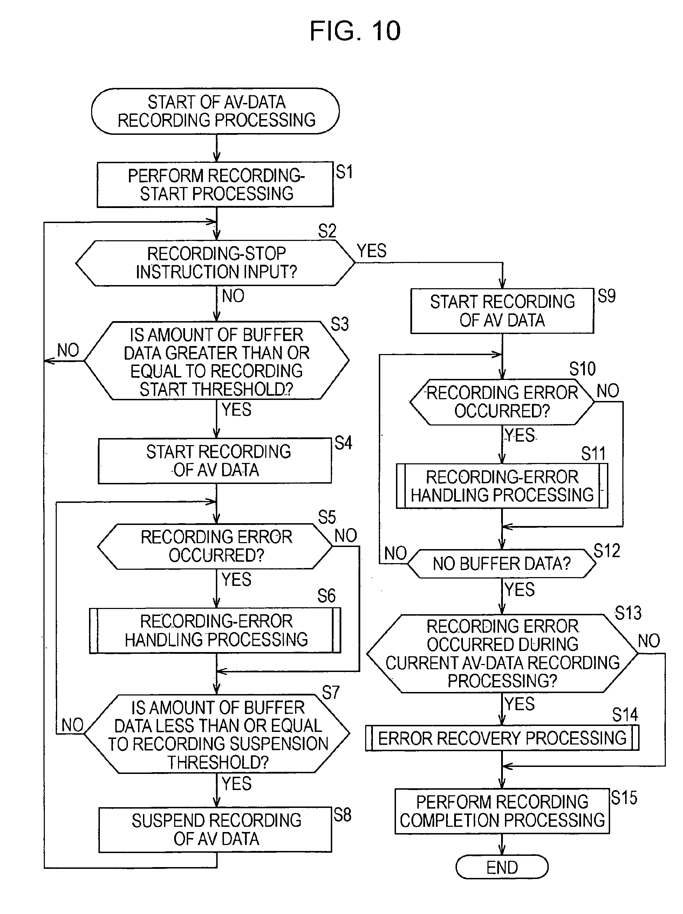

During execution of AV-data recording processing, which is described below with reference to FIG. 10, the data recording/playback unit 113 records data, obtained by multiplexing the video data input from the video input section 111 and the audio data input from the audio input section 112 (the multiplexed data will hereinafter be referred to as "AV data"), on a storage medium 102.

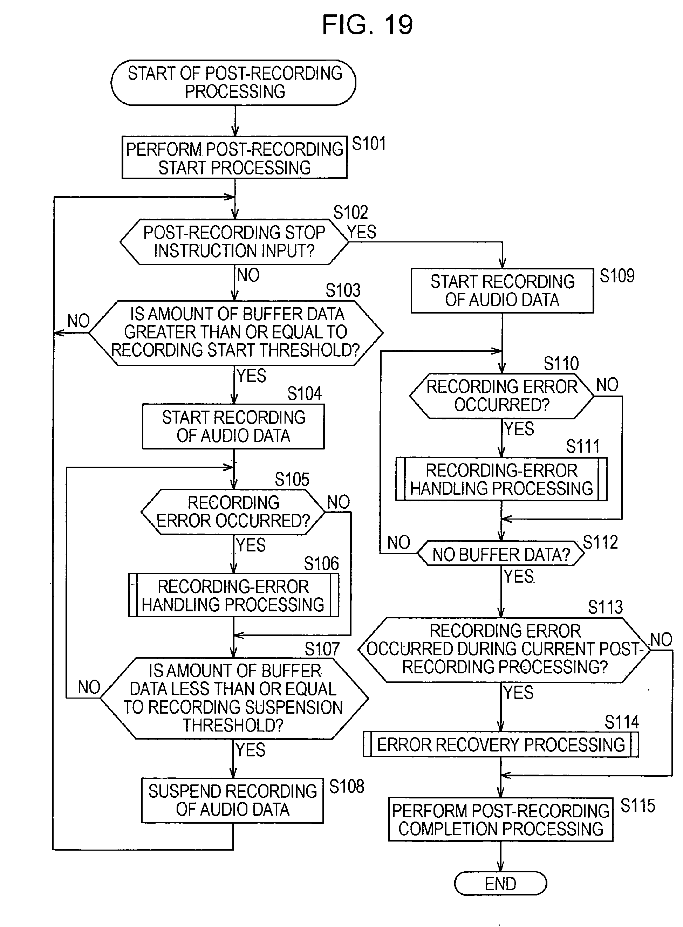

During the execution of post-recording processing in which the so-called "post recording" (post-scoring) is performed, the data recording/playback unit 113 records the audio data, input from the audio input section 112, on the storage medium 102. In the post-recording processing, which is described below with reference to FIG. 19, after AV data is recorded on the storage medium 102, audio data to be played back in synchronization with the recorded AV data is recorded on the storage medium 102.

The data recording/playback unit 113 further reads a file recorded on the storage medium 102, and generates video data and audio data, based on data contained in the read file. The data recording/playback unit 113 supplies the generated video data to the video display section 114 and supplies the generated audio data to the audio playback section 115.

The video display section 114 displays video, based on the video data supplied from the data recording/playback unit 113, on a monitor or the like, which is not shown.

The audio playback section 115 outputs audio, based on the audio data supplied from the data recording/playback unit 113, via a speaker or the like, which is not shown.

The data recording/playback unit 113 includes the video processing unit 131, the audio processor 132, a multiplexer 133, a write buffer 134, a drive interface 135, a drive 136, a data playback section 137, and a controller 138.

The video processor 131 is implemented with, for example, a DSP or a CPU (central processing unit) for executing a video processing program. Under the control of the controller 138, the video processor 131 encodes (encodes) the video data, input from the video input section 111, into video data based on, for example, an MPEG-2, MPEG-4, or motion JPEG (Joint Photographic Experts Group) system. The video processor 131 supplies the encoded video data to the multiplexer 133.

The audio processor 132 is implemented with, for example, a DSP or a CPU for executing an audio processing program. Under the control of the controller 138, the audio processor 132 encodes (encodes) the audio data, input from the audio input section 112, into audio data based on, for example, an AC3 (Audio Code Number 3) or AAC (Advanced Audio Coding) system. During the execution of the AV-data recording processing, the audio processor 132 supplies the encoded audio data to the multiplexer 133. During the execution of the post-recording processing, the audio processor 132 supplies the encoded audio data to the write buffer 134.

Under the control of the controller 138, the multiplexer 133 multiplexes the video data supplied from the video processor 131 and the audio data supplied from the audio processor 132 and supplies AV data obtained by multiplexing the video data and the audio data to the write buffer 134.

The write buffer 134 sequentially stores the AV data supplied from the multiplexer 133 or the audio data supplied from the audio processor 132. That is, the AV data supplied earlier (previously) from the multiplexer 133 or the audio data supplied from the audio processor 132 is stored in the beginning of the write buffer 134. Hereinafter, the AV data or audio data stored in the write buffer 134 is referred to as "buffer data" and the data amount of AV data or audio data stored in the write buffer 134 is referred to as the "amount of buffer data".

Under the control of the controller 138, the drive interface 135 reads the AV data or audio data stored in the write buffer 134 and supplies the read AV data or audio data to the drive 136. The drive interface 135 also obtains data and/or a file, read by the drive 136 from the storage medium 102, from the drive 136, and supplies the obtained data and/or file to the data playback section 137 or the controller 138, as needed.

For example, the storage medium 102, such as a magnetic disk, an optical disk, or a magneto-optical disk, is loaded into the drive 136. Under the control of the controller 138, the drive 136 adds an error code based on, for example, RSPC (Reed-Solomon product code) to the AV data or audio data supplied from the drive interface 135 and further performs, for example, 8-16 modulation on the resulting AV data or audio data. Under the control of the controller 138, the drive 136 records the error-code-added and modulated AV data or audio data onto the storage medium 102.

The minimum recording unit of the storage medium 102 is a sector and one sector is, for example, 2048 bytes. Further, a group of a predetermined number of sectors is a cluster and one cluster is, for example, 65536 bytes (32 sectors). For each cluster, the controller 138 specifies an area in which data is to be recorded.

The address of a sector (hereinafter referred to as a "sector address") is recorded in the beginning of each sector. Before data is recorded in each sector, the drive 136 reads the sector address. When a sector address cannot be read or when tracking performed by a tracking servo system, not shown, is lost during data recording in a sector, the drive 136 determines that the sector is a defective sector and supplies information containing the address of the defective sector (the information will hereinafter be referred to as "defective-sector information") to the controller 138 via the drive interface 135. A cluster containing even one defective sector is regarded as a defective cluster, in which no data is recorded. When data is recorded on the storage medium 102, the drive 136 also supplies recording-sector information containing the address of a sector in which the data is recorded to the controller 138 via the drive interface 135.

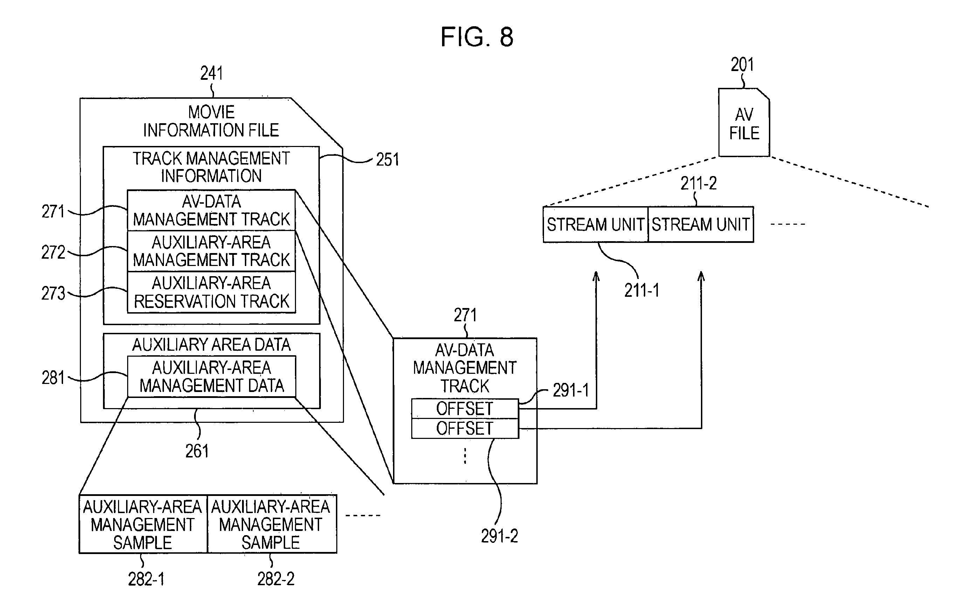

Under the control of the controller 138, the drive 136 reads file management information containing information such as the positions and the recording capacities of storage-medium 102 areas in which data and/or files are recorded, an area map indicating the state of each sector of the storage medium 102 (e.g., whether or not data is recorded in the sector or whether or not the sector is a defective sector), and a movie information file 241 described below with reference to FIG. 8. The drive 136 then supplies the read file management information, the area map, and the movie information file 241 to the controller 138 via the drive interface 135. The drive 136 also obtains the file management information, the area map, and the movie information file 241 from the controller 138 via the drive interface 135. Under the control of the controller 138, the drive 136 records the file management information, the area map, and the movie information file 241 onto the storage medium 102.

The controller 138 includes, for example, a general-purpose CPU, ROM (read only memory), and RAM (random access memory), or an MPU (micro processing unit). By executing a program, the controller 138 controls the video processor 131, the audio processor 132, the multiplexer 133, the drive interface 135, the drive 136, and the data playback section 137, while monitoring the amount of data in the write buffer 134. The controller 138 also obtains a user instruction, which corresponds to a user operation, via a switch or button, which is not shown.

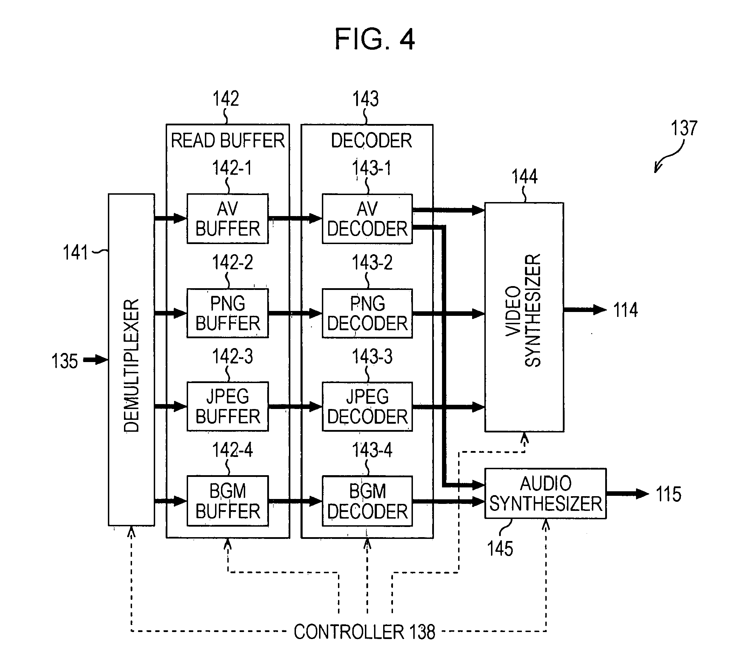

FIG. 4 is a block diagram showing details of the data playback section 137 in the recording/playback apparatus 101 shown in FIG. 3. The data playback section 137 includes a demultiplexer 141, a read buffer 142, a decoder 143, a video synthesizer 144, and an audio synthesizer 145.

Under the control of the controller 138, the demultiplexer 141 demultiplexes the data, supplied from the drive interface 135, into AV data contained in an AV file, PNG data contained in a PNG (portable network graphics) file, JPEG data contained in a JPEG file, and audio data contained in an audio file; supplies the data of each type to the read buffer 142 corresponding to the type of file; and causes the data to be stored therein.

The read buffer 142 includes an AV buffer 142-1, a PNG buffer 142-2, a JPEG buffer 142-3, and a BGM (background music file) buffer 142-4. The AV data is supplied from the demultiplexer 141 to the AV buffer 142-1 and is stored therein. The PNG data is supplied from the demultiplexer 141 to the PNG buffer 142-2 and is stored therein. The JPEG data is supplied from the demultiplexer 141 to the JPEG buffer 142-3 and is stored therein. The audio data is supplied from the demultiplexer 141 to the BGM buffer 142-4 and is stored therein.

The decoder 143 includes an AV decoder 143-1, a PNG decoder 143-2, a JPEG decoder 143-3, and a BGM decoder 143-4. Under the control of the controller 138, the AV decoder 143-1 reads the AV data from the AV buffer 142-1, decodes (decodes) the read AV data, supplies video data contained in the decoded data to the video synthesizer 144, and supplies audio data contained in the decoded data to the audio synthesizer 145. Under the control of the controller 138, the PNG decoder 143-2 reads the PNG data from the PNG buffer 142-2, decodes (decodes) the read PNG data, and supplies the decoded data to the video synthesizer 144. Under the control of the controller 138, the JPEG decoder 143-3 reads the JPEG data from the JPEG buffer 142-3, decodes (decodes) the read JPEG data, and supplies the decoded data to the video synthesizer 144. Under the control of the controller 138, the BGM decoder 143-4 reads the audio data from the BGM buffer 142-4, decodes (decodes) the read data, and supplies the decoded data to the audio synthesizer 145.

Under the control of the controller 138, each decoder in the decoder 143 reads the data from the corresponding buffer in accordance with the playback-time information of each piece of data, the information being contained in the movie information file 241; encodes the read data; and supplies the encoded data to the video synthesizer 144 or the audio synthesizer 145.

Under the control of the controller 138, the video synthesizer 144 synthesizes video data from the data supplied from the AV decoder 143-1, the PNG decoder 143-2, or the JPEG decoder 143-3 and supplies the synthesized video data to the video display section 114.

Under the control of the controller 138, the audio synthesizer 145 synthesizes audio data from the data supplied from the AV decoder 143-1 or the BGM decoder 143-4 and supplies the synthesized audio data to the audio playback section 115.

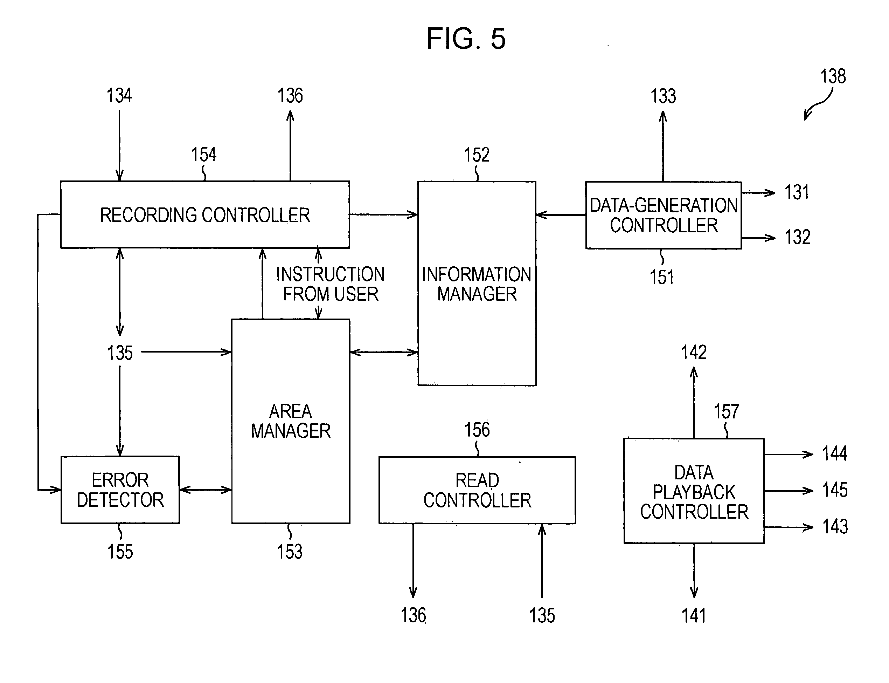

FIG. 5 is a block diagram showing one example of the configuration of functions realized by the controller 138 for executing a recording-control program. The controller 138 executes the program to thereby realize a data-generation controller 151, an information manager 152, an area manager 153, a recording controller 154, an error detector 155, a read controller 156, and a data-playback controller 157.

During the execution of AV-data processing, by controlling the video processor 131, the audio processor 132, and the multiplexer 133, the data-generation controller 151 causes AV data to be generated from video data input from the video input section 111 and the audio data input from the audio input section 112 and causes the generated AV data to be stored in the write buffer 134. The data-generation controller 151 supplies, to the information manager 152, information indicating that data is supplied from the multiplexer 133 to the write buffer 134 by controlling the multiplexer 133 (the information will hereinafter be referred to as "buffer storage information"). The data amount of AV data supplied, by a single supply operation, from the multiplexer 133 to the write buffer 134 is always constant. Thus, based on the buffer storage information, the information manager 152 can recognize the data amount of AV data stored in the write buffer 134.

During the execution of post-recording processing, by controlling the audio processor 132, the data-generation controller 151 causes the audio data input from the audio input section 112 to be encoded and causes the encoded audio data to be stored in the write buffer 134. The data-generation controller 151 also supplies the buffer storage information to the information manager 152. The data amount of audio data supplied, by a single supply operation, from the audio processor 132 to the write buffer 134 is always constant. Thus, based on the buffer storage information, the information manager 152 can recognize the data amount of audio data supplied from the audio processor 132 to the write buffer 134.

During the execution of the AV-data recording processing, when predetermined-playback-time AV data to be recorded in a contiguous area on the storage medium 102 is stored in the write buffer 134, the information manager 152 supplies AV-data data-amount information indicating the data amount of AV data to the area manager 153.

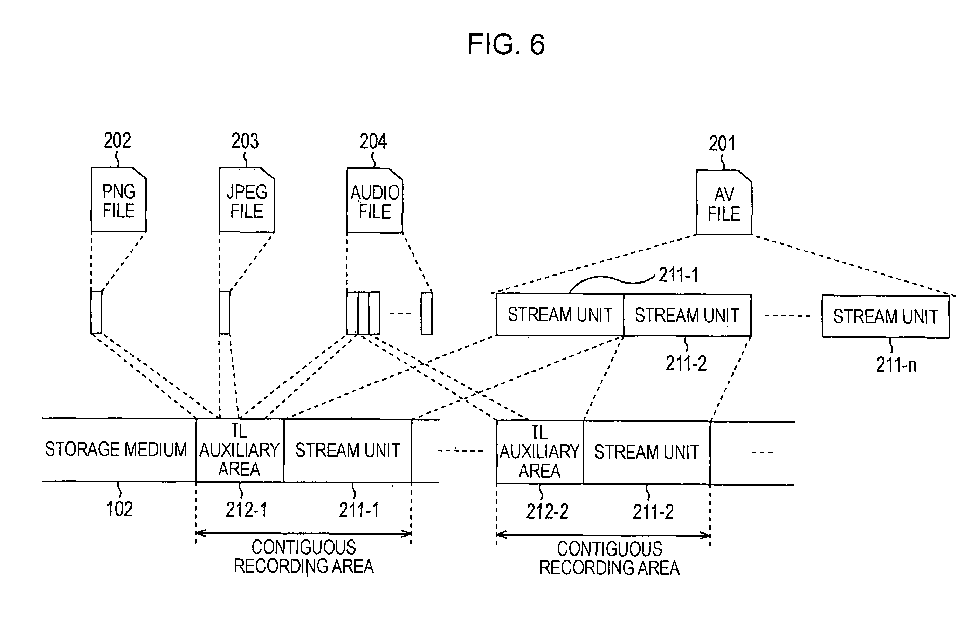

During the execution of the post-recording processing, when audio data to be recorded in one IL auxiliary area 212, which is described below with reference to FIG. 6, is stored in the write buffer 134, the information manager 152 supplies audio-data data-amount information indicating the data amount of audio data to the area manager 153.

The information manager 152 generates the movie information file 241 (FIG. 8) and updates the file management information and the movie information file 241. The information manager 152 causes the movie information file 241 to be stored in a memory such as a RAM, not shown, the memory being accessible from each section of the controller 138.

During the execution of the AV-data recording processing, based on the area map, the area manager 153 searches for a storage-medium 102 area in which AV data is to be recorded and supplies AV-data recording-area information indicating the information of the found area to the recording controller 154. The area manager 153 also supplies the AV-data recording-area information to the information manager 152 or the error detector 155, as needed.

During the execution of the post-recording processing, the area manager 153 obtains an instruction regarding the recording start position of audio data, the instruction corresponding to a user operation and being input via a switch, button or the like, which is not shown. Based on the area map and the movie information file 241, the area manager 153 searches for an area in which the audio data is to be recorded and supplies audio-data recording-area information indicating the information of the found area to the recording controller 154. The area manager 153 also supplies the audio-data recording-area information to the information manager 152 or the error detector 155, as needed. When an audio-data recording error, which is described below with reference to FIG. 19, occurs, the area management information supplies, to the information manager 152, the recording controller 154, and the error detector 155, audio data and new-contiguous-recording-area information indicating the information of an area in which data recorded in an area in which the recording error occurred is to be newly recorded.

The area manager 153 obtains recording-sector information and defective-sector information from the drive 136 via the drive interface 135 and updates the area map based on the recording-sector information and the defective-sector information.

During the execution of the AV-data recording processing, when the amount of buffer data is greater than or equal to a predetermined threshold (hereinafter referred to as a "recording start threshold") while the amount of buffer data is being monitored, the recording controller 154 controls the drive interface 135 to cause the AV data to be read from the write buffer 134 and cause the read AV data to be supplied to the drive 136. By controlling the drive 136, the recording controller 154 causes the AV data to be recorded in the area indicated by the AV-data recording-area information. Upon the recording of the AV data, the recording controller 154 supplies the AV-data recording-area information to the information manager 152 and the error detector 155. When the amount of buffer data is less than or equal to a predetermined threshold (hereinafter referred to as a "recording suspension threshold"), the recording controller 154 controls the drive interface 135 to cause the AV data reading from the write buffer 134 to be suspended and controls the drive 136 to cause the AV-data recording to be suspended.

During the execution of the post-recording processing, when the amount of buffer data is greater than or equal to the recording start threshold while the amount of buffer data is being monitored, the recording controller 154 controls the drive interface 135 to cause the audio data to be read from the write buffer 134 and cause the read audio data to be supplied to the drive 136. By controlling the drive 136, the record controller 154 causes the audio data to recorded in the area indicated by the audio-data recording-area information. Upon the recording of the audio data, the recording controller 154 supplies the audio-data recording-area information to the information manager 152 and the error detector 155. When the amount of buffer data is less than or equal to the recording suspension threshold, the recording controller 154 controls the drive interface 135 to cause the audio data reading from the write buffer 134 to be suspended and controls the drive 136 to cause the audio data recording to be suspended.

The recording start threshold and the recording suspension threshold during the execution of the AV-data recording processing and the recording start threshold and the recording suspension threshold during the execution of the post-recording processing may be set to different values from each other.

The recording controller 154 supplies the file management information, the movie information file 241, and the area map to the drive 136 via the drive interface 135 and controls the drive 136 to cause the file management information, the movie information file 241, and the area map to be recorded on the storage medium 102. The recording controller 154 obtains audio-data recording-start and recording-stop instructions that correspond to user operations and that are input via a switch, button or the like, which is not shown.

The error detector 155 obtains the defective-sector information from the drive 136 via the drive interface 135. During the execution of the AV-data recording processing, the error detector 155 detects the generation of an AV-data recording error, based on the AV-data recording-area information and the defective-sector information. Details of the AV-data recording error are described below with reference to FIG. 10. The error detector 155 supplies information regarding the AV-data recording error to the area manager 153.

During the execution of the post-recording processing, the error detector 155 detects the generation of an audio-data recording error, based on the audio-data recording-area information and the defective-sector information. Details of the audio-data recording error are described below with reference to FIG. 19. The error detector 155 supplies information regarding the audio-data recording error to the area manager 153.

By controlling the drive 136, the read controller 156 causes data and/or a file recorded on the storage medium 102 to be read. The read controller 156 obtains the file management information, the area map, and the movie information file 241 read by the drive 136 from the storage medium 102, via the drive interface 135, and causes the obtained file management information, the area map, and the movie information file 241 to be stored in the memory, such as a RAM, not shown, the memory being accessible from each section of the controller 138.

While monitoring the amount of data in the read buffer 142, the data-playback controller 157 controls the demultiplexer 141, the decoder 143, the video synthesizer 144, and the audio synthesizer 145 to cause video data and audio data to be generated from the data contained in the file read from the drive 136, cause the video data to be supplied to the video display section 114, and cause the audio data to be supplied to the audio playback section 115.

FIG. 6 illustrates an example of the structure of files recorded on the storage medium 102 shown in FIG. 3. In the example of FIG. 6, data of an AV file 201 and data of a PNG file 202, a JPEG file 203, and an audio file 204, which are auxiliary files to be played back in synchronization with the AV file 201, are recorded on the storage medium 102. For the storage medium 102, the maximum transfer rate of the AV file 201 is specified to be 15.57 Mbps and the maximum transfer rate of the auxiliary files is specified to be 0.256 Mbps. Each file to be recorded on the storage medium 102 is assigned a track ID, which is a unique number for identifying the file.

Of the AV file 201, data for a continuous playback time (e.g., 10 to 20 seconds) (the data for a continuous playback time will hereinafter be referred to as a "stream unit") is located and recorded in one contiguous recording area on the storage medium 102. That is, the AV file 201 is divided into n stream units 211-1 to 211-n, which are recorded on the storage medium 102. Hereinafter, the stream units 211-1 to 211-n will simply be referred to as "stream units 211", unless otherwise distinction is particularly required. Hereinafter, the stream units may also be referred to as "SUs" for short.

The contiguous recording area may be discontinuous with other contiguous recording areas. IL (interleaved) auxiliary areas 212-1, 212-2, ... are located immediately before the stream units 211-1, 211-2, ... in the contiguous recording areas, respectively. Hereinafter, the IL auxiliary areas 212-1 to 212-n will simply be referred to as "IL auxiliary areas 212", unless otherwise distinction is particularly required.

When the AV file 201 is recorded, the IL auxiliary areas 212 are secured in a blank state as reserved areas, in which the PNG file 202, the JPEG file 203, and the audio file 204, which are to be recorded after the AV file 201 is recorded, are stored so as to correspond to the amount of time that is the same as the playback time (e.g., 10 to 20 seconds) of the stream units 211. In the example of FIG. 6, the PNG file 202 and the JPEG file 203 are stored in the IL auxiliary area 212-1, whereas the audio file 204 is stored in, for example, the multiple IL auxiliary areas 212-1 and 212-2 in a distributed manner, since the audio file 204 is played back in a longer time than the playback time of data in the IL auxiliary area 212. Hereinafter, blank areas in which no data is recorded in the IL auxiliary areas 212 will particularly be referred to as "reserved areas".

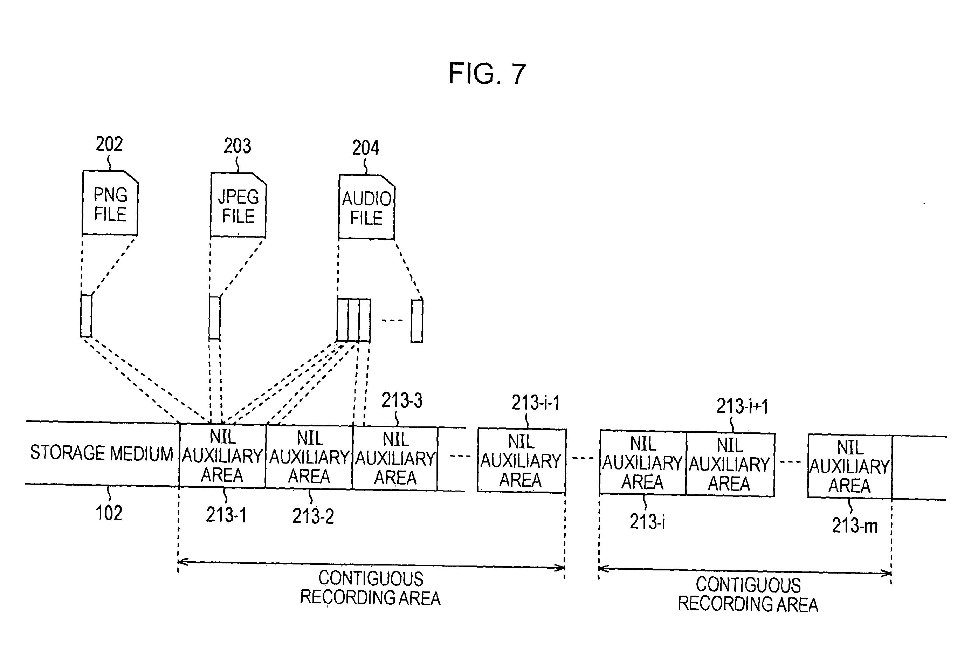

As shown in FIG. 7, other than the IL auxiliary areas 212, NIL (non-interleaved) auxiliary areas 213-1, 213-2, 213-3, ..., 213-i-1, 213-i, 213-i+1, ..., and 213-m for storing the PNG file, JPEG file, and audio file can also be located on the storage medium 102.

In the example of FIG. 7, on the storage medium 102, the NIL auxiliary areas 213-1, 213-2, 213-3, ..., and 213-i-1 are located in one contiguous recording area and the NIL auxiliary areas 213-i, 213-i+1, ..., and 213-m are located in one contiguous recording area, the both contiguous recording areas being different from the contiguous recording areas of the stream units 211. Hereinafter, the NIL auxiliary areas 213-1 to 213-m will simply be referred to as "NIL auxiliary areas 213", unless otherwise distinction is particularly required.

The playback time of one NIL auxiliary area 213 is the same as the playback time (e.g., 10 to 20 seconds) of the stream unit 211. The total playback time of multiple NIL auxiliary areas 213 located in a contiguous recording area are specified to be 100 seconds or more for a transfer rate of 0.256 Mbps. The contiguous recording areas may be discontinuous with each other. The NIL auxiliary areas 213 are sequentially located and thus are used to store an auxiliary file that cannot be stored in the IL auxiliary area 212 or to collectively copy files from a personal computer or the like.

As described above, the PNG file 202, the JPEG file 203, and the audio file 204 may be stored in both the IL auxiliary areas 212 and the NIL auxiliary areas 213 and may be stored in either of them. Even when the PNG file 202, the JPEG file 203, and the audio file 204 are stored in either of the auxiliary areas, the other auxiliary areas exist as blank areas.

Hereinafter, AV data recorded on the storage medium 102 during one recording operation, for example, from when the recording of AV data is started by the user until the recording is finished, and data and files associated with the AV data will be collectively referred to as a "recording unit". For example, one recording unit includes the AV file 201; the PNG file 202, the JPEG file 203, and the audio file 204, which are recorded in the IL auxiliary areas 212 or the NIL auxiliary areas 213; and the movie information file 241 (FIG. 8) and so on.

FIG. 8 illustrates an example of the structure of the movie information file 241 for managing AV data, data recorded in the IL auxiliary areas 212, and so on.

The movie information file 241 is constituted by track management information 251, which contains management information for actual data of the AV file 201, and auxiliary area data 261, which contains information on data recorded in the IL auxiliary areas 212.

The track management information 251 is constituted by an AV-data management track 271, an auxiliary-area management track 272, and an auxiliary-area reservation track 273. The AV-data management track 271 contains information for managing the AV file 201. The auxiliary-area management track 272 contains information for managing auxiliary-area management data 281 of the auxiliary area data 261. The auxiliary-area reservation track 273 contains information for managing a reserved area in each IL auxiliary area 212. The AV-data management track 271 contains offsets 291-1, 291-2, ... indicating the amounts of data of the corresponding stream units 211. Hereinafter, the offsets 291-1, 291-2, ... will simply be referred to as "offsets 291", unless otherwise distinction is particularly required.

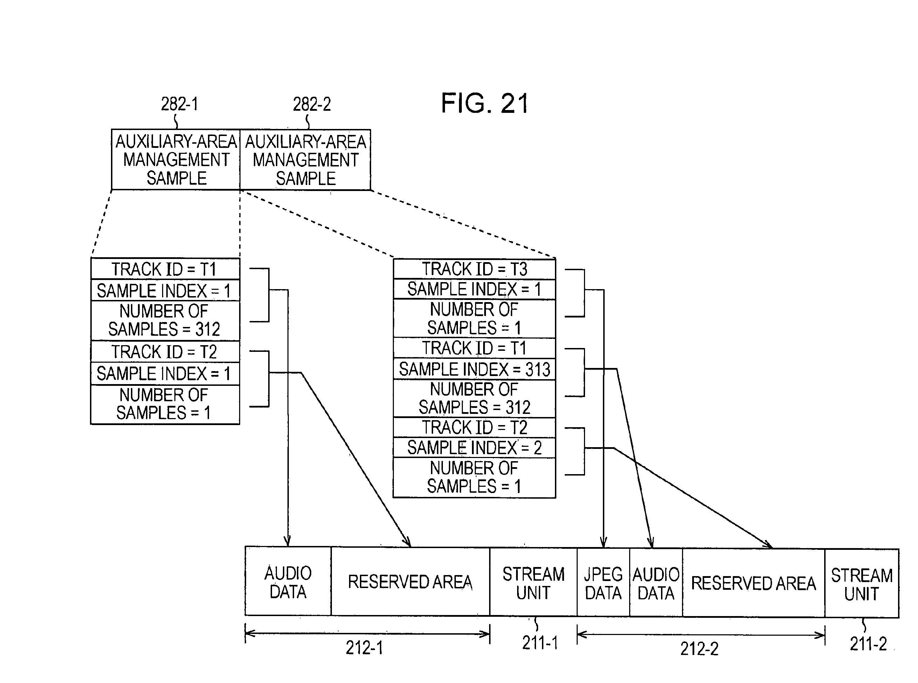

The auxiliary-area management data 281 of the auxiliary area data 261 contains an auxiliary-area management sample 282-1, an auxiliary-area management sample 282-2, .... Hereinafter, the auxiliary-area management samples 282-1, 282-2, ... will simply be referred to as "auxiliary-area management samples 282", unless otherwise distinction is particularly required. One auxiliary-area management sample 282 is created for each IL auxiliary area 212 and contains information regarding data recorded in the IL auxiliary area 212. Details of the auxiliary-area management samples 282 are described below with reference to FIG. 21. The movie information file 241 contains information regarding the playback time of each piece of data recorded in the stream units 211 and the IL auxiliary areas 212.

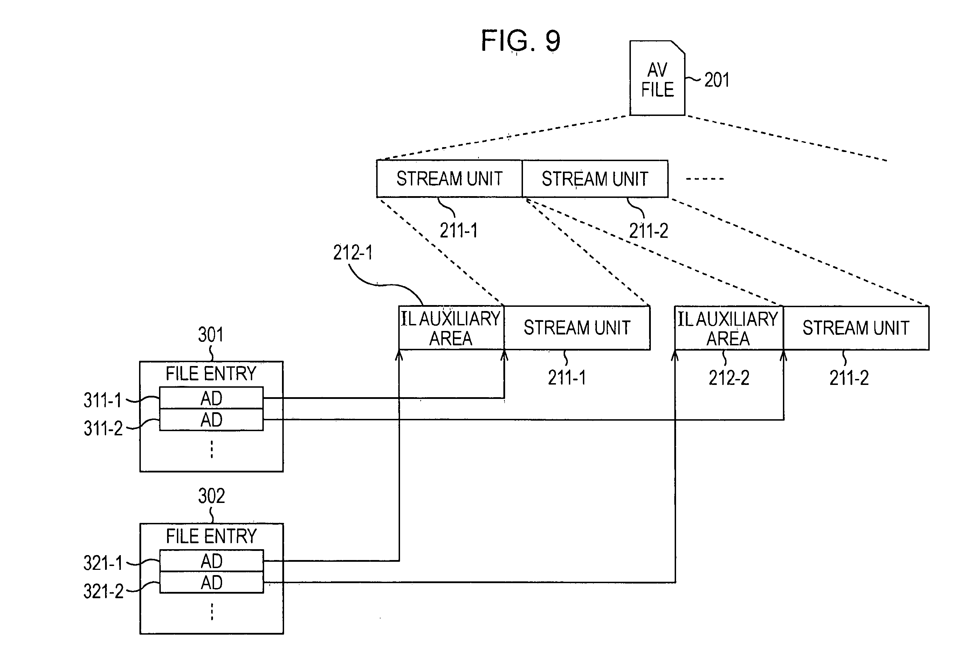

FIG. 9 shows an example of the structure of file entries contained in the file management information, which contains information, such as the recording capacities and the positions of storage medium 102 areas in which data and/or files are recorded. A file entry 301 contains information on recording areas in which the stream units 211 are recorded and a file entry 302 contains information on reserved areas in the IL auxiliary areas 212.

The file entry 301 is constituted by ADs (application descriptors) 311-1, 311-2, .... Hereinafter, the ADs 311-1, 311-2, ... will simply be referred to as "ADs 311", unless otherwise distinction is particularly required. Each AD 311 contains the starting address and the recording capacity of a recording area in which the corresponding stream unit 211 is recorded. The file entry 302 is constituted by ADs (application descriptors) 321-1, 321-2, .... Hereinafter, the ADs 321-1, 321-2, ... will simply be referred to as "ADs 321", unless otherwise distinction is particularly required. Each AD 321 contains the starting address and the recording capacity of a reserved area in the corresponding IL auxiliary area 212. When the IL auxiliary area 212 is secured on the storage medium 102, the entire area in the IL auxiliary area 212 is a reserved area, so that the starting address and the recording capacity which are recorded in the AD 321 are equal to the starting address and the recording capacity of the IL auxiliary area 212.

Next, the AV-data recording processing executed by the recording/playback apparatus 101 will be described with reference to the flow chart shown in FIG. 10. This processing is initiated when the user inputs an instruction for starting recording processing.

In step S1, the controller 138 performs recording-start processing. That is, the controller 138 causes each section of the recording/playback apparatus 101 to execute recording-start processing. Specifically, the video input section 111 starts inputting of video data to the video processor 131 and the audio input section 112 starts inputting of audio data to the audio processor 132. Under the control of the data-generation controller 151, the video processor 131 encodes the video data input from the video input section 111 and supplies the encoded video data to the multiplexer 133. Under the control of the data-generation controller 151, the audio processor 132 encodes the audio data input from the audio input section 112 and supplies the encoded audio data to the multiplexer 133.

Under the control of the data-generation controller 151, the multiplexer 133 multiplexes the video data and the audio data, supplies the multiplexed AV data to the write buffer 134, and causes the AV data to be stored therein. Each time the multiplexer 133 supplies the AV data to the write buffer 134, the data-generation controller 151 supplies the buffer storage information to the information manager 152.

Under the control of the read controller 156, the drive 136 reads the file management information and the area map from the storage medium 102, and the read controller 156 obtains the file management information and the area map via the drive interface 135 and causes the file management information and the area map to be stored in the memory such as a RAM, not shown, the memory being accessible from each section of the controller 138.

The information manager 152 generates a movie information file 241 and causes the movie information file 241 to be stored in the memory such as a RAM, not shown, the memory being accessible from each section of the controller 138. Each time the buffer storage information is supplied, the information manager 152 checks whether or not predetermined-playback-time AV data to be recorded as a stream unit 211 is newly stored in the write buffer 134. When a new stream unit 211 is stored in the write buffer 134, the information manager 152 adds an offset 291 indicating the amount of data of the stream unit 211 to the AV-data management track 271. Thus, the AV-data management track 271 is updated before the stream unit 211 is recorded on the storage medium 102. The information manager 152 supplies, to the area manager 153, the AV-data data-amount information indicating the amount of data of the stream unit 211 newly stored in the write buffer 134.

Based on the area map and the AV-data data-amount information, the area manager 153 searches for a contiguous recording area, which is a blank area on the storage medium 102 and is greater than or equal to the total recording capacity of the data amount of the stream unit 211 and the recording capacity of the predetermined IL auxiliary area 212. Based on the search result of the contiguous recording area, the area manager 153 supplies, to the recording controller 154, the AV-data recording-area information containing the starting address and the recording capacity of the IL auxiliary area 212 in the contiguous recording area in which the stream unit 211 is to be recorded and the starting address and the recording capacity of an area in which the stream unit 211 is to be recorded.

In step S2, the recording controller 154 determines whether or not the user has entered a recording stop instruction by operating a button or the like, not shown, of the recording/playback apparatus 101. When it is determined that no recording-stop instruction is input, the process proceeds to step S3.

In step S3, the recording controller 154 checks the amount of buffer data in the write buffer 134 to determine whether or not the amount of buffer data is greater than or equal to the recording start threshold. When it is determined that the amount of buffer data is less than the recording start threshold, the process returns to step S2. The processing in steps S2 and S3 is repeated until it is determined in step S2 that the recording stop instruction was input or it is determined in step S3 that the amount of buffer data is greater than or equal to the recording start threshold. During the processing, the AV data is sequentially supplied to the write buffer 134, so that the amount of buffer data increases.

When it is determined in step S3 that the amount of buffer data is greater than or equal to the recording start threshold, the process proceeds to step S4.

In step S4, under the control of the recording controller 154, the drive 136 starts recording of the AV data on the storage medium 102. Specifically, under the control of the recording controller 154, the drive interface 135 reads the AV data from the write buffer 134 and supplies the read AV data to the drive 136. Each time one stream unit 211 is supplied to the drive 136, the recording controller 154 supplies the AV-data recording-area information for the stream unit 211 to the information manager 152 and the error detector 155.

When the processing of step S4 is performed for the first time, the information manager 152 newly adds a file entry 301 and a file entry 302 to the file management information; adds an AD 311-1 containing the starting address and the recording capacity of the recording area of the first steam unit 211-1 to the file entry 301, based on the AV-data recording-area information; and adds, to the file entry 302, an AD 321-1 containing the starting address and the recording capacity of the IL auxiliary area 212 in a contiguous recording area in which the first stream unit 211-1 is to be recorded. Thereafter, each time the information manager 152 obtains the AV-data recording-area information from the recording controller 154, the information manager 152 adds an AD 311 for a corresponding stream unit 211 to the file entry 301 and adds an AD 321 for a corresponding IL auxiliary area 212 to the file entry 302. That is, the file entry 302 and the file entry 301 are updated at a point when the stream unit 211 is supplied to the drive 136.

Under the control of the recording controller 154, the drive 136 records the stream unit 211, which is AV data, in an area indicated by the AV-data recording-area information. Upon detecting a defective sector during the recording of AV data, the drive 136 supplies the defective-sector information containing the address of the detected defective sector to the area manager 153 and the error detector 155 via the drive interface 135. The drive 136 also supplies the recording-sector information containing the addresses of sectors in which the AV data was recorded to the area manager 153 via the drive interface 135. Based on the recording-sector information and the defective-sector information, the area manager 153 sequentially updates the area map.

The AV data read by the drive interface 135 is deleted from the write buffer 134 (e.g., is logically deleted as a result of a change in a position indicated by a read pointer). Thus, since the AV-data reading speed of the drive interface 135 is higher than the AV-data supplying speed of the multiplexer 133, the amount of buffer data begins to decrease.

In step S5, the error detector 155 determines whether or not a recording error occurred. Specifically, based on the AV-data recording-area information and the defective-sector information, the error detector 155 detects whether or not the rate of defective clusters in the area in which the stream unit 211 is to be recorded is greater than or equal to a predetermined rate (e.g., 2 percent). When the rate of defective clusters in the area in which the stream unit 211 is to be recorded is greater than or equal to the predetermined rate, the error detector 155 determines that a recording error occurred. For example, when a stream unit 211 for a playback time of 10 seconds is to be recorded at a transfer rate of 15.57 Mbps, the recording capacity of the stream unit 211 is 297 clusters (15.57 Mbps (15570000 bps) x 10 seconds ÷ 8 bits ÷ 65536 bytes). When six defective clusters, which account for 2 percent or more of the clusters, are detected, it is determined that a recording error occurred. When it is determined in step S5 that a recording error occurred, the process proceeds to step S6.

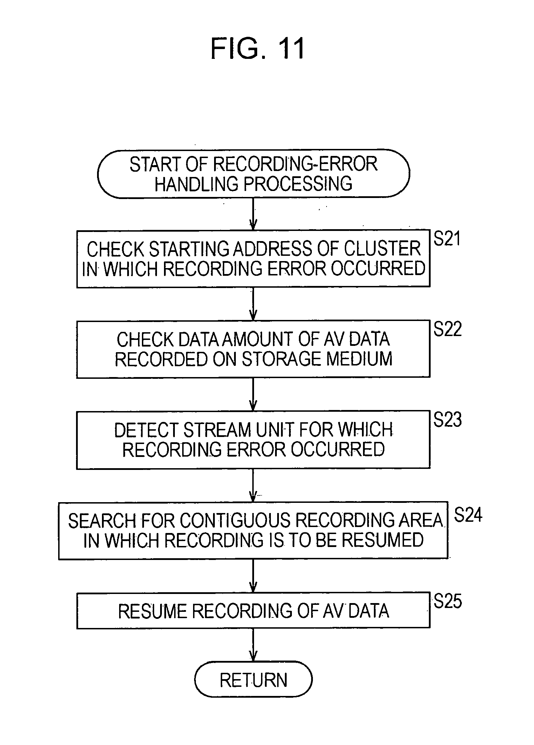

In step S6, the controller 138 performs recording-error handling processing. Specifically, in this processing, which described below with reference to FIG. 11, a new contiguous recording area in which the stream unit 211 for which the recording error occurred can be recorded is searched for, the recording of AV data from a point when the recording error occurred is resumed, and the rest of the stream unit 211 for which the recording error occurred is recorded in the found contiguous recording area. Thereafter, stream units 211 subsequent to the stream unit 211 for which the recording error occurred are continuously recorded.

When it is determined in step S5 that no recording error occurred, the processing in step S6 is skipped and the process proceeds to step S7.

In step S7, the recording controller 154 checks the amount of buffer data in the write buffer 134 to determine whether or not the amount of buffer data is less than or equal to the recording suspension threshold. When it is determined that the amount of buffer data is greater than the recording suspension threshold, the process returns to step S5 and the processing in steps S5 to S7 is repeated until it is determined in step S7 that the amount of buffer data is less than or equal to the recording suspension threshold. During the processing, the AV data is recorded on the storage medium 102.

When it is determined in step S7 that the amount of buffer data is less than or equal to the recording suspension threshold, the process proceeds to step S8. In step S8, the recording controller 154 suspends the recording of the AV data. Specifically, the recording controller 154 causes the drive interface 135 to suspend the AV data reading from the write buffer 134 and causes the drive 136 to suspend the AV-data recording onto the storage medium 102. As a result, the amount of buffer data begins to increase.

Thereafter, the process returns to step S2. Until it is determined in step S2 that a recording stop instruction is input, the processing in steps S2 to S8 is repeated, so that the AV data is recorded on the storage medium 102.

When it is determined in step S2 that a recording stop instruction is input, the process proceeds to step S9. In step S9, regardless of the amount of buffer data, the AV-data recording is started in the same manner as the processing in step S4. Upon the input of the recording stop instruction, the video input section 111 stops the inputting of video data to the video processor 131 and the audio input section 112 stops the inputting of audio data to the audio processor 132. As a result, the supply of the AV data to the write buffer 134 is stopped.

In step S10, the error detector 155 determines whether or not a recording error occurred, in the same manner as the processing in step S5. When it is determined that a recording error occurred, the process proceeds to step S11, in which recording-error handling processing is performed in the same manner as the processing in step S6.

When it is determined in step S10 that no recording error occurred, the processing in step S11 is skipped and the process proceeds to step S12.

In step S12, the recording controller 154 checks the amount of buffer data in the write buffer 134 to determine whether or not the buffer data stored in the write buffer 134 is exhausted. When it is determined that the buffer data remains, i.e., when AV data that has not been recorded on the storage medium 102 remains, the process returns to step S10 and the processing in steps S10 to S12 is repeated until it is determined in step S12 that there is no buffer data.

When it is determined in step S12 that there is no buffer data, the process proceeds to step S13. In step S13, the error detector 155 determines whether or not a recording error occurred in the current AV-data recording processing. When it is determined that a recording error occurred in the current AV-data recording processing, that is, when it was determined in step S5 or S10 that a recording error occurred and the recording-error handling processing was performed in step S6 or S11, the process proceeds to step S14.

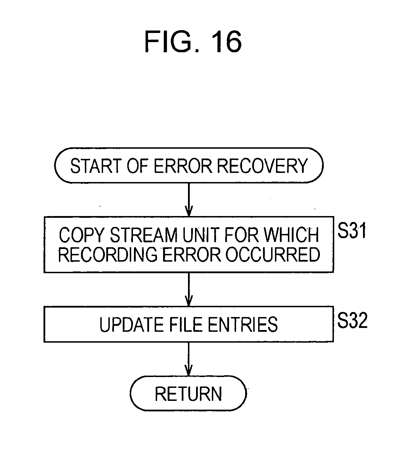

In step S14, the controller 138 performs error recovery processing. In this processing, with respect to the stream unit 211 that has been recorded separately as the result of the occurrence of the recording error, the stream unit 211 already recorded before the occurrence of the recording error is copied to a contiguous recording area in which the stream unit 211 was recorded after the occurrence of the recording error, so that the stream unit 211 for which the recording error occurred is recorded in one contiguous recording area. Details of the error recovery processing are described below with reference to FIG. 16.

When it is determined in step S13 that no recording error occurred in the current AV-data recording processing, the processing in step S14 is skipped and the process proceeds to step S15.

In step S15, the controller 138 performs recording completion processing to complete the AV-data recording processing. Specifically, the recording controller 154 supplies the file management information, the movie information file 241, and the area map to the drive 136 via the drive interface 135 and controls the drive 136 to cause the file management information, the movie information file 241, and the area map to be recorded on the storage medium 102.

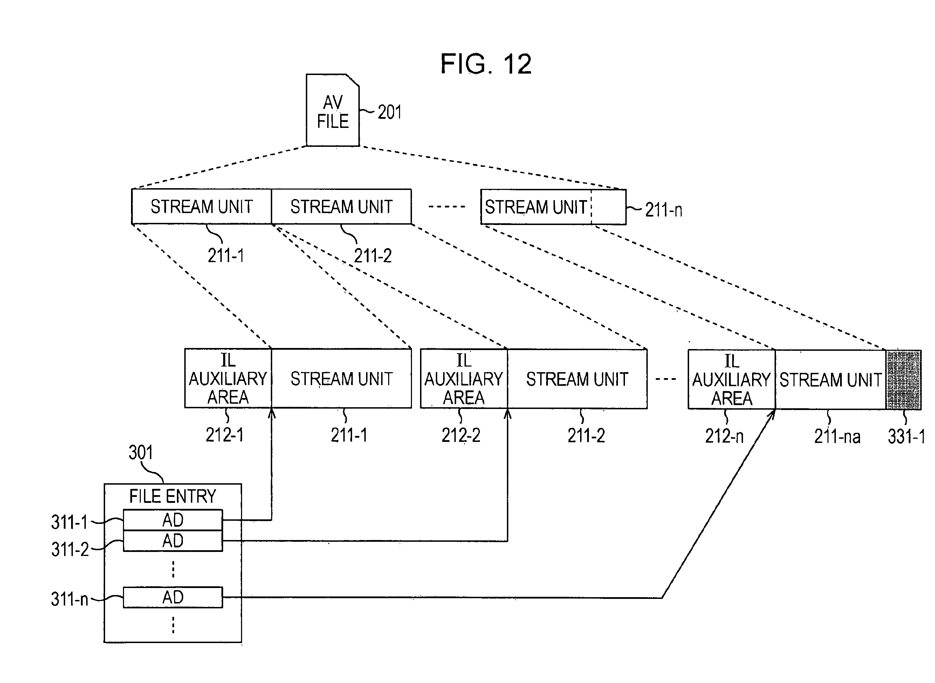

Next, details of the recording-error handling processing in step S6 or S11 shown in FIG. 10 will be described with reference to FIG. 11. A description below is given of a case in which when stream units up to a stream unit 211-na, which is a portion of stream units 211-n, are recorded on the storage medium 102 during the recording of the stream units 211-n, defective clusters 331-1 are detected and a recording error occurs, as shown in FIG. 12.

In step S21, the error detector 155 checks the starting address of the clusters in which the recording error occurred. Specifically, based on the area map and the defective-sector information, the error detector 155 searches for clusters containing defective clusters detected when the recording error occurred, i.e., the defective cluster 331-1, and checks the starting address of the found clusters.

In step S22, the error detector 155 checks the data amount of AV data already recorded on the storage medium 102 (the data amount will hereinafter be referred to as the "amount of recorded AV data"). Specifically, the error detector 155 detects the AD 311 of the file entry 301 in which the information of the recording area of the stream unit 211 containing the starting address of the defective clusters in which the recording error occurred. In the example shown in FIG. 12, an AD 311-n is detected as the AD 311 in which information of the recording area of the stream unit 211, the information containing the starting address of the defective clusters in which the recording error occurred, is recorded.

Next, the error detector 155 determines the total of the recording capacities recorded in the AD 311-1 to AD 311-(n-1) and the total of the recording capacities from the starting address recorded in the AD 311-n to an address immediately before the defective clusters 331-1, and the determined values are regarded as the amount of recorded AV data. That is, the determined amount of recorded AV data is equal to the total of the data amount of stream units 211-1 to 211-(n-1) and the data amount of stream unit 211-na, which is a portion of the stream units 211-n.

In step S23, the error detector 155 detects the stream unit 211 for which the recording error occurred. Specifically, the error detector 155 sequentially adds the values of the offsets 291 in the AV-data management track 271 from the first offset 291-1. The error detector 155 regards, as the stream unit 211 for which the recording error occurred, the stream unit 211 corresponding to the offset 291 when the total value of the offsets 291 exceeds the amount of recorded AV data.

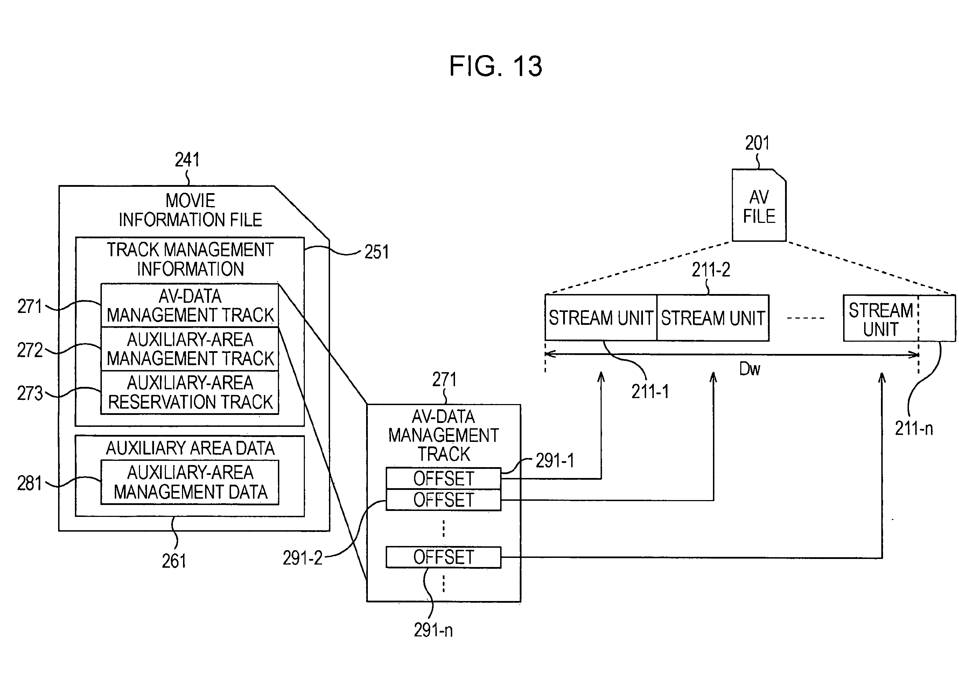

As shown in FIG. 13, when the amount of recorded AV data is indicated by Dw denoted by an arrow in the figure, the total value of the offsets 291 exceeds the amount of recorded AV data Dw, when the offsets 291-1 to 291-n are summed up. Thus, the stream unit 211 for which the recording error occurred is detected as being the stream unit 211-n. The error detector 155 supplies information indicating the stream unit 211 for which the recording error occurred to the area manager 153.

In this example, only one stream unit 211 is recorded in the recording area of the stream unit 211 indicated by the AD 311. Thus, in step S22, when the AD 311 in which information of the recording area of the stream unit 211, the information containing the starting address of the defective clusters in which the recording error occurred, is detected, the stream unit 211 for which the recording error occurred is identified. Thus, the processing in step S23 can be omitted.

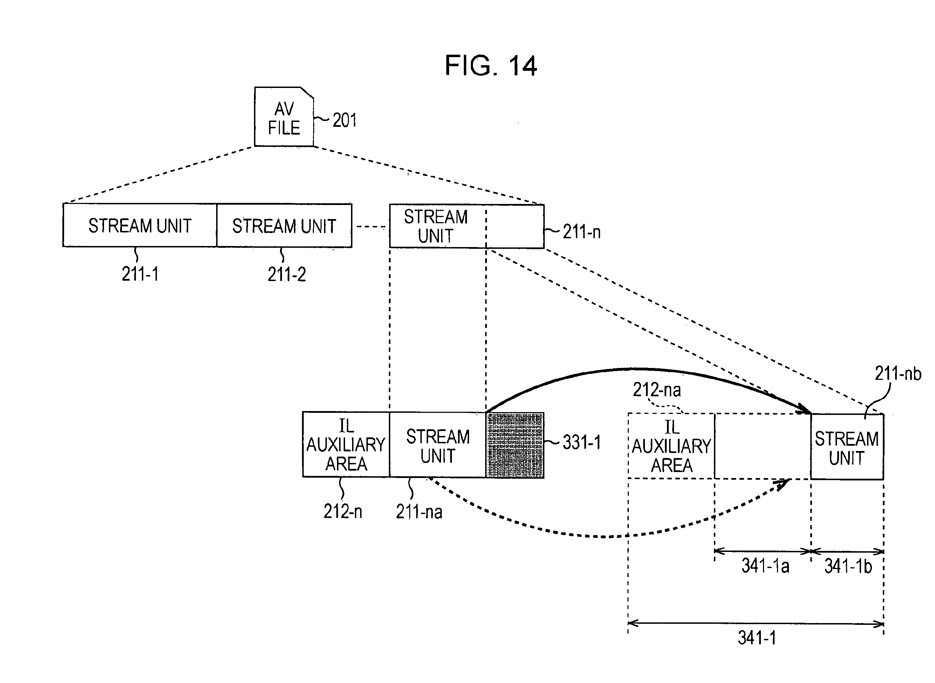

In step S24, the area manager 153 searches for a contiguous recording area in which the recording of the stream unit 211 for which the error occurred is to be resumed. Specifically, based on the file entry 301, the area manager 153 determines the recording capacity of the recording area of the stream unit 211 and determines the total of the recording capacity of the recording area of the stream unit 211 for which the recording error occurred and the recording capacity of the predetermined IL auxiliary area 212, i.e., the recording capacity of the contiguous recording area in which the stream unit 211 for which the recording error occurred is to be recorded. Based on the area map, the area manager 153 searches for a blank area greater than the recording capacity of the determined contiguous recording area and uses the found area as the contiguous recording area in which the recording of the stream unit 211 for which the recording error occurred is to be resumed. It is assumed below that, in step S24, a contiguous recording area 341-1 shown in FIG. 14 is found.

In step S25, under the control of the recording controller 154, the drive 136 causes the drive 136 to resume the recording of the AV data. Specifically, first, the area manager 153 determines a position at which the recording of the AV data is to be resumed. For example, in the example shown in FIG. 14, the area manager 153 secures, at the beginning of the contiguous recording area 341-1, an IL auxiliary area 212-na having the same recording capacity as the IL auxiliary area 212-n and secures, immediately after the IL auxiliary area 212-na, an area 341-1a having the same recording capacity as the data amount of stream unit 211-na already recorded on the storage medium 102. The area manager 153 then supplies the AV-data recording-area information containing the starting address and the recording capacity of the IL auxiliary area 212-na, the starting address and the recording capacity of the area 341-la, and the starting address and the recording capacity of a remaining area 341-1b of the contiguous recording area 341-1 to the information manager 152, the recording controller 154, and the error detector 155.

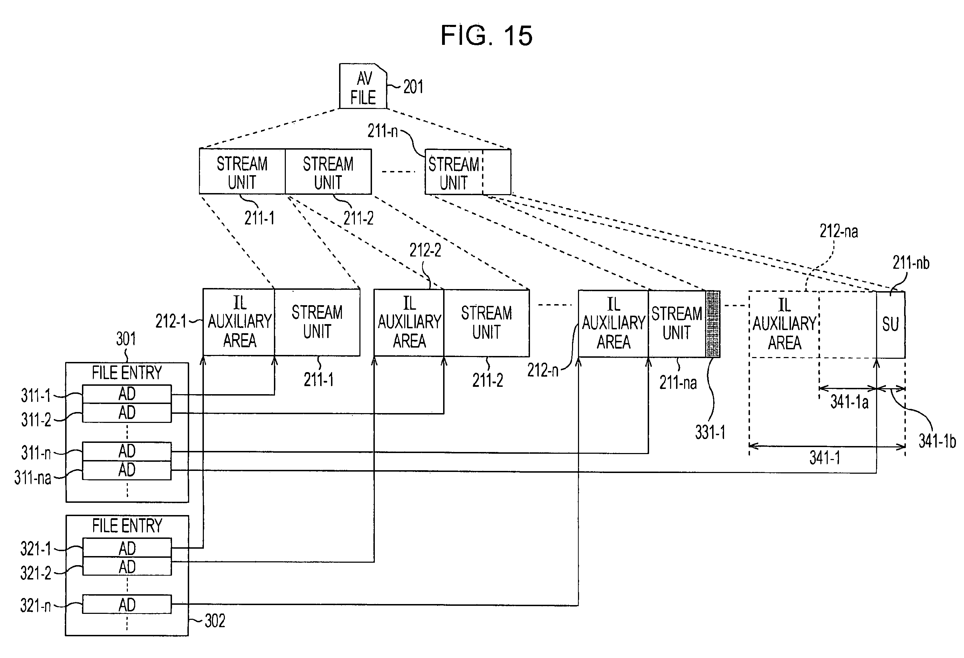

Based on the supplied AV-data recording-area information, the information manager 152 updates the file entry 301. FIG. 15 is a diagram showing an example of the state of the file entries after the information manager 152 updates the file entry 301 in step S25. In the example shown in FIG. 15, the stream unit 211-1 to the stream unit 211-na, which is a halfway portion of the stream unit 211-n, are recorded on the storage medium 102, the ADs 311-1 to 311-n are recorded in the file 301, and ADs 321-1 to 321-n are recorded in the file entry 302.

The starting address of the recoding area of the stream unit 211-1 is recorded as the address of the AD 311-1 and the starting address of the recording area of the stream unit 211-2 is recorded as the address of 311-2. In the same manner, the starting address of the recording area of the stream unit 211-na is recorded as the address of AD 311-n. The starting address of the reserved area of the IL auxiliary area 212-1 is recorded as the address of the AD 321-1 and the starting address of the reserved area of the IL auxiliary area 212-2 is recorded as the address of 321-2. In the same manner, the starting address of the reserved area of the IL auxiliary area 212-n is recorded as the address of AD 321-n. Based on the supplied AV-data recording-area information, the information manager 152 further adds an AD 311-na containing the starting address and the recording capacity of the area 341-1b to the file entry 301.

Under the control of the recording controller 154, the drive 136 records a stream unit 211-nb, which is a portion contained in the stream unit 211-n for which the recording error occurred and unrecorded on the storage medium 102, from the beginning of the area 341-1a. Thereafter, stream units 211 subsequent to the stream unit 211-n are continuously recorded.

Next, details of the error recovery processing in step S14 shown in FIG. 10 will be described with reference to the flow chart of FIG. 16.

In step S31, under the control of the recording controller 154, the drive 136 copies the stream unit 211 for which the recording error occurred. Specifically, in the example shown in FIG. 14, under the control of the recording controller 154, of the stream units 211-n for which the recording error occurred, the drive 136 copies the stream unit 211-na, already recorded on the storage medium 102 when the recording error occurred, to the area 341-1a. Consequently, the stream unit 211-n for which the recording error occurred is recorded in the contiguous area in one contiguous recording area 341-1.

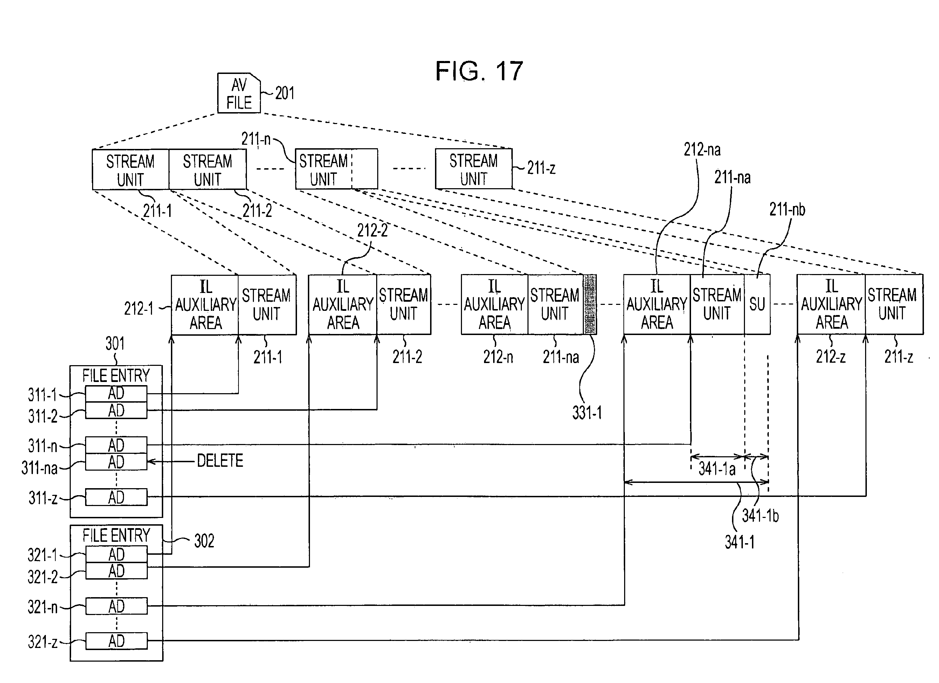

In step S32, the information manager 152 updates the file entry 301. FIG. 17 is a diagram showing an example of the state of the file entry after the entire AV data is recorded on the storage medium 102 after the recording error in the example shown in FIG. 12 occurred. Stream units 211-1 to 211-z are recorded on the storage medium 102, ADs 311-1 to 311-z are recorded in the file entry 301, and ADs 321-1 to 321-z are recorded in the file entry 302. The starting address of the recording area of the stream unit 211-z is recorded as the address of the AD 311-z and the starting address of the reserved area of the IL auxiliary area 212-z is recorded as the address of the AD 321-1.

In step S32, the information manager 152 changes the address recorded in the AD 311-n from the starting address of the area in which the stream unit 211-na was recorded when the recording error occurred to the starting address of the area 341-1a, i.e., to the starting address of the area to which the stream unit 211-na was copied in the processing in step S31. The information manager 152 deletes the AD 311-na (e.g., turns off a flag indicating whether or not the data is valid). The information manager 152 further changes the address of the AD 321-n in the file entry 302 from the starting address of the IL auxiliary area 212-n to the starting address of the IL auxiliary area 212-na. Consequently, the stream unit 211-n recorded in the contiguous recording area 341-1 and the IL auxiliary area 212-na secured in the contiguous recording area 341-1 become valid, and the IL auxiliary area 212-n and the stream unit 211-n recorded before the occurrence of the recording error become invalid.

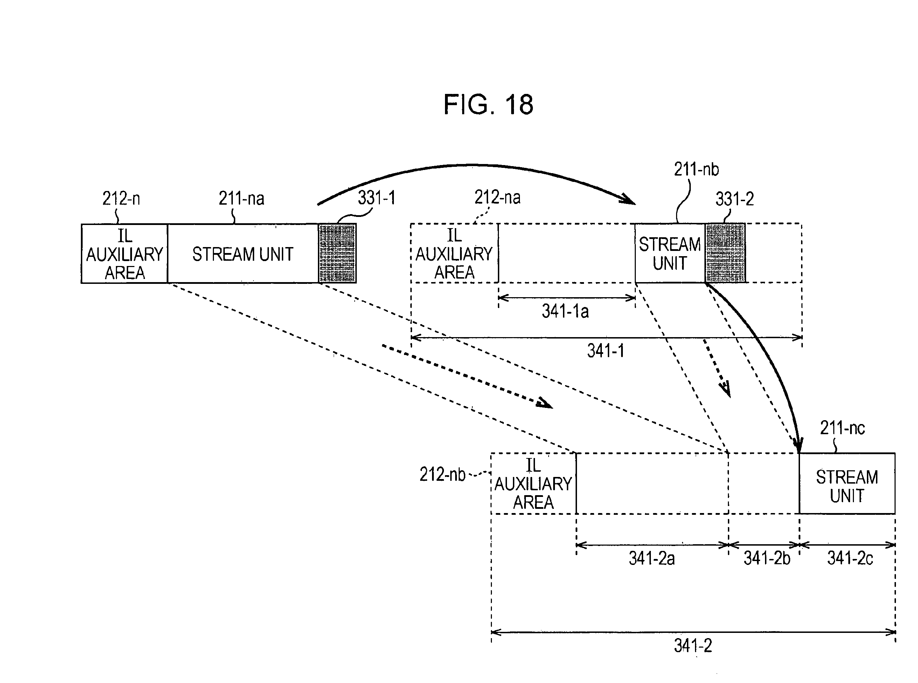

As shown in FIG. 18, while the stream unit 211-nb is being recorded in the contiguous recording area 341-1, when defective clusters 331-2 are detected in the contiguous recording area 341-1 and it is determined that a recording error occurred, the area manager 153 searches for a new contiguous recording area 341-2. The area manager 153 secures, from the beginning of the contiguous recording area 341-2, an IL auxiliary area 212-nb, an area 341-2a having the same recording capacity as the data amount of stream unit 211-na, and an area 341-2b having the same recording capacity as the data amount of stream unit 211-nb. Under the control of the recording controller 154, the drive 136 records a stream unit 211-nc, which is a portion contained in the stream unit 211 and unrecorded on the storage medium 102, in an area 341-2c immediately after the area 341-2b.

Thereafter, in the error recovery processing, under the control of the recording controller 154, the drive 136 copies the stream unit 211-na to the recording area 341-2a and copies the stream unit 211-nb to the area 341-2b, so that the stream unit 211 for which the recording error occurred is recorded in the contiguous area in one contiguous recording area 341-2. Subsequently, when a recording error occurs in a new contiguous recording area in which the recording of the stream unit 211 for which the recording error occurred is resumed, a new contiguous recording area is searched for and the recording of the stream unit 211 for which the recording error occurred is resumed, in the same manner as described above.

Thus, even when defective clusters are detected on the storage medium 102 and a recording error occurs, the stream unit 211 is recorded in a contiguous area on the storage medium 102, without occurrence of data loss or interruption of data recording. Based on a change in an area in which the stream unit 211 is recorded, the file management information (the file entries 301 and 302) is updated.

Next, the post-recording processing executed by the recording/playback apparatus 101 will be described with reference to the flow chart of FIG. 19. The post-recording processing of the recording/playback apparatus 101 has two types of post-recording processing, namely, real-time post-recording processing and edit post-recording processing. In the real-time post-recording processing, the user plays back AV data and so on recorded on the storage medium 102 and inputs audio to be played back in synchronization with the video while viewing the video and listening to the sound. In the edit post-recording processing, the user performs edit processing or the like to correlate an audio file prerecorded on the storage medium 102 with AV data recorded on the storage medium 102. The real-time post-recording processing is described below. This processing is initiated when the user inputs an instruction for starting the post-recording processing.

In step S101, the controller 138 performs post-recording start processing. That is, the controller 138 causes each section of the recording/playback apparatus 101 to-execute recording-start processing. Under the control of the read controller 156, the drive 136 reads the file management information, the area map, and the movie information file 241 from the storage medium 102, and the read controller 156 obtains the file management information, the area map, and the movie information file 241 via the drive interface 135 and causes the file management information, the area map, and the movie information file 241 to be stored in the memory, such as a RAM, not shown, the memory being accessible from each section of the controller 138.

Under the control-of the read controller 156, the drive 136 starts the reading of the stream unit 211 (AV data of the AV file 201) containing a scene specified by the user and PNG data of the PNG file 202, JPEG data of the JPEG file 203, and audio data of the audio file 204, the data PNG data, the JPEG data, and the audio data being recorded in an IL auxiliary area 212 corresponding to the stream unit 211; and sequentially reads data recorded in the subsequent stream units 211 and the subsequent IL auxiliary areas 212. Under the control of the read controller 156, the drive 136 decodes the read data and performs error correction thereon. The drive 136 supplies the decoded and error-corrected data to the demultiplexer 141 via the drive interface 135.

Under the control of the data-playback controller 157, the demultiplexer 141 demultiplexes the data supplied from the drive interface 135 into the AV data of the AV file 201, the PNG data of the PNG file 202, the JPEG data of the JPEG file 203, and the audio data of the audio file 204 and supplies the data of each type to the read buffer 142 corresponding to the file type.

Under the control of the data-playback controller 157, the AV decoder 143-1 reads the AV data from the AV buffer 142-1, decodes (decodes) the read data, supplies video data contained in the decoded data to the video synthesizer 144, and supplies audio data contained in the decoded data to the audio synthesizer 145. Under the control of the data-playback controller 157, the PNG decoder 143-2 reads the PNG data from the PNG buffer 142-2, decodes (decodes) the read data, and supplies the decoded data to the video synthesizer 144.

Under the control of the data-playback controller 157, the JPEG decoder 143-3 reads the JPEG data from the JPEG buffer 142-3, decodes (decodes) the read data, and supplies the decoded data to the video synthesizer 144. Under the control of the data-playback controller 157, the BGM decoder 143-4 reads the audio data from the BGM buffer 142-4, decodes (decodes) the read data, and supplies the decoded data to the audio synthesizer 145. Under the control of the data-playback controller 157, each decoder in the decoder 143 reads the data from each buffer in accordance with the playback-time information of each piece of data, the information being contained in the movie information file 241; encodes the read data; and supplies the encoded data to the video synthesizer 144 or the audio synthesizer 145.

Under the control of the data-playback controller 157, the video synthesizer 144 synthesizes video data from the data supplied from the AV decoder 143-1, the PNG decoder 143-2, or the JPEG decoder 143-3 and supplies the synthesized video data to the video display section 114. Under the control of the data-playback controller 157, the audio synthesizer 145 synthesizes audio data from the data supplied from the AV decoder 143-1 or the BGM decoder 143-4 and supplies the synthesized audio data to the audio playback section 115.

The video display section 114 displays video, based on the video data supplied from the video synthesizer 144, on a monitor or the like, which is not shown. The audio playback section 115 outputs audio, based on the audio data supplied from the audio synthesizer 145, via a speaker or the like, which is not shown.

While viewing the video displayed on the video display section 114 and listening to the audio output from the audio playback section 115, the user inputs audio to be played back in synchronization with the video to the audio input section 112. The audio input section 112 inputs digital audio data, obtained by A/D-converting audio signals of the input audio, to the audio processor 132. Under the control of the data-generation controller 151, the audio processor 132 encodes the supplied audio data into, for example, AC3-system audio data, supplies the encoded audio data to the write buffer 134, and causes the encoded audio data to be stored therein. Each time the audio processor 132 supplies audio data to the write buffer 134, the data-generation controller 151 supplies the buffer storage information to the information manager 152.

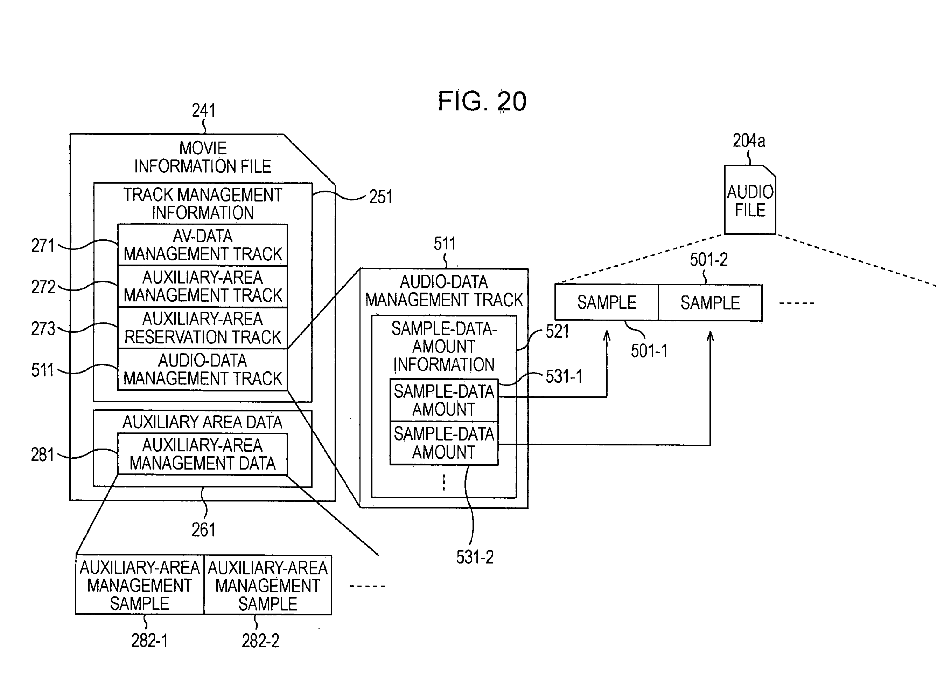

As shown in FIG. 20, upon the start of the post-recording processing, the information manager 152 adds an audio-data management track 511 to the movie information file 241. When an audio-data file to be recorded in an IL auxiliary area 212 in the current post-recording processing is regarded as an audio file 204a, the audio file 204a contains samples 501-1, 501-2, ..., each of which is a minimum unit of audio data. Hereinafter, the samples 501-1, 501-2, ... will simply be referred to as "samples 501", unless otherwise distinction is particularly required. Each sample 501 corresponds to data obtained by collectively encoding a predetermined number of pieces of sampling data generated by sampling analog audio signals at a predetermined sampling frequency. Similarly to audio data, a minimum unit of JPEG data, PNG data, or the like, other than audio data, is also a sample, and the definition of a sample varies depending on the type of data. Each sample of a piece of data is assigned a unique sample number and is managed based on the sample number.

The audio-data management track 511 contains sample-data-amount information 521 indicating the data-amount information of the samples 501 contained in the audio file 204a. The data amounts of the respective samples 501 are recorded, as sample data amounts 531-1, 531-2, ..., in the sample-data-amount information 521. Hereinafter, the sample data amounts 531-1, 531-2, ... will simply be referred to as "sample data amounts 531", unless otherwise distinction is particularly required. When a PNG file 202, a JPEG file 203, or the like, other than audio file, is recorded in the IL auxiliary area 212, a PNG-data management track, a JPEG-data management track, or the like, which is similar to the audio-data management track 511, is added to the movie information file 241.

Each time the buffer storage information is supplied, the information manager 152 checks whether or not a sample 501 is newly stored in the write buffer 134. When a new sample 501 is stored in the write buffer 134, the information manager 152 adds data amount information 531 for the sample 501 to the sample-data-amount information 521 in the audio-data management track 511. That is, the audio-data management track 511 is updated before the sample 501 is recorded on the storage medium 102.

When all samples 501 of audio data to be recorded in one IL auxiliary area 212 are stored in the write buffer 134, the information manager 152 supplies, to the area manager 153, audio-data data-amount information indicating the total of the data amounts of the samples 501 of the audio data to be recorded in the IL auxiliary area 212. The information manager 152 updates the information of the auxiliary-area management sample 282 of the auxiliary area data 261 in the movie information file 241, the auxiliary-area management sample 282 corresponding to the IL auxiliary area 212 in which the audio data is to be recorded.

FIG. 21 shows an example of the structure of data of the auxiliary-area management samples 282. For each piece of data recorded in the IL auxiliary area 212, the auxiliary-area management sample 282 is constituted by the track ID of a file containing the data, a sample index indicating the sample number of the first one of samples contained in the data, and the number of samples contained in the data. FIG. 21 shows an example of data of the auxiliary-area management samples 282 when audio data is recorded in the IL auxiliary area 212-1 and JPEG data and audio data are recorded in the IL auxiliary area 212-2.

In the example shown in FIG. 21, the auxiliary management sample 282-1 indicates, of samples 501 of the audio-data contained in the audio file with a track ID of T1, a total of 312 samples 501, i.e., samples 501 with sample numbers 1 to 312, with the sample having sample number 1 being located at the beginning are recorded in the IL auxiliary area 212-1. The auxiliary-area management sample 282-2 indicates, of the samples 501 of the audio data contained in the audio file with a track ID of T1, a total of 312 samples 501, i.e., samples 501 with sample numbers 313 to 624, with the sample having the sample number 313 being located at the beginning are recorded in the auxiliary management sample 282-2 and, of samples of JPEG data contained in a JPEG file with a track ID of T3, a total of one sample with the sample having sample number 1 being located at the beginning are recorded in the IL auxiliary area 212-2.

A reserved area of the IL auxiliary area 212 is managed by a reserved-area file, which is one logic file, and one reserved area is handled as one sample. In the example shown in FIG. 21, the auxiliary-area management sample 282-1 indicates, of reserved-area samples contained in a reserved-area file with a track ID of T2, a sample with sample number 1 is secured in the IL auxiliary area 212-1, and the auxiliary-area management sample 282-2 indicates, of the reserved-area samples contained in the reserved-area file with a track ID of T2, a sample with sample number 2 is secured in the IL auxiliary area 212-2.

When all samples of audio data to be recorded in one IL auxiliary area 212 are stored in the write buffer 134, the information manager 152 adds the information of the samples 501 of the audio data to be recorded to the auxiliary-area management sample 282 corresponding to the IL auxiliary area 212 in which the audio data is to be recorded.

In step S102, the recording controller 154 determines whether or not the user inputs a post-recording stop instruction by operating a button or the like, not shown, of the recording apparatus 101. When it is determined that no post-recording stop instruction is input, the process proceeds to step S103.

In step S103, the recording controller 154 obtains the amount of buffer data from the write buffer 134 and determines whether or not the amount of buffer data is greater than or equal to the recording start threshold. When it is determined that the amount of buffer data is less than the recording start threshold, the process returns to step S102. The processing in steps S102 and S103 is repeated until it is determined in step S102 that a post-recording stop instruction is input or it is determined in step S103 that the amount of buffer data is greater than or equal to the recording start threshold. During the processing, audio data is sequentially supplied to the write buffer 134, so that the amount of buffer data increases.

When it is determined in step S103 that the amount of buffer data is greater than or equal to the recording start threshold, the process proceeds to step S104.

In step S104, under the control of the recording controller 154, the drive 136 starts the recording of audio data onto the storage medium 102. Specifically, the area manager 153 reduces the recording capacity of the reserved area of the IL auxiliary area 212 in which the audio data is to be recorded to secure an area for recording the audio data.

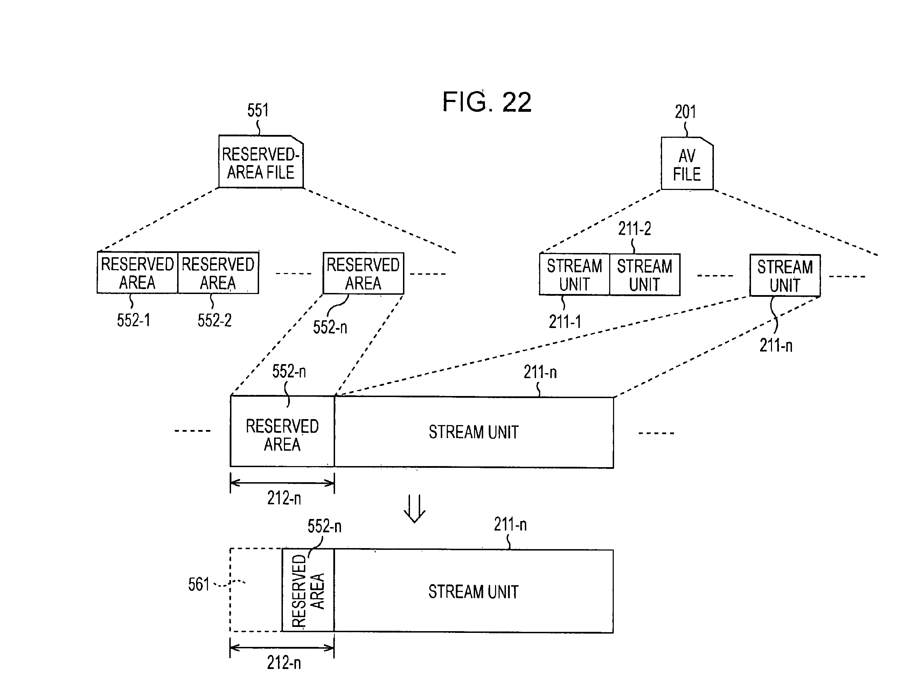

A description will be given of an example in which audio data is to be recorded in an IL auxiliary area 212-n shown in FIG. 22. It is assumed below that the reserved areas of the IL auxiliary areas 212 are managed by a reserved-area file 551, which is a logic file, and the reserved-area file 551 contains reserved areas 552-1, 552-2, ... which are reserved areas for the IL auxiliary areas 212-1, 212-2, .... Hereinafter, the reserved areas 552-1, 552-2, ... will simply be referred to as "reserved areas 552", unless otherwise distinction is particularly required.

When audio data is to be recorded in the IL auxiliary area 212-n, the area manager 153 changes the values of the starting address and the recording capacity of the AD 321-n in the file entry 302, the information of a reserved area 552-n for the IL auxiliary area 212-n being recorded in the AD 321-n, to reduce the recording capacity of the reserved area 552-n. A reduction in the recording capacity of the reserved area 552-n causes an area 561 to be secured in the IL auxiliary area 212-n. The area manager 153 supplies the audio-data recording-area information containing the starting address and the recording capacity of the area 561 to the information manager 152 and the recording controller 154.

Under the control of the recording controller 154, the drive interface 135 reads the audio data from the write buffer 134 and supplies the read audio data to the drive 136.

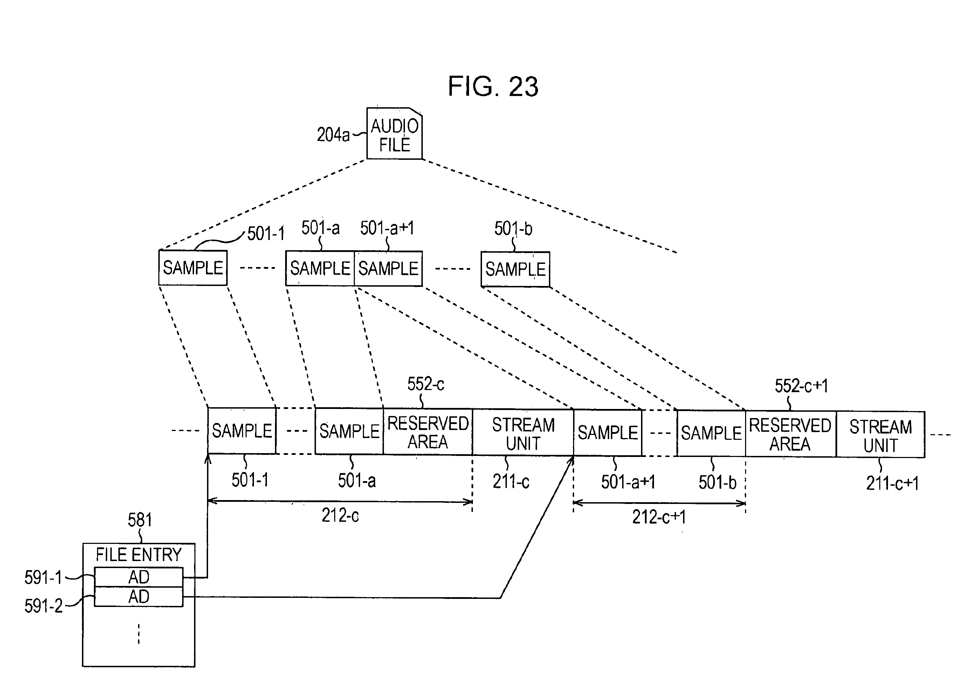

When the processing of step S104 is performed for the first time, the information manager 152 adds a file entry 581 shown in FIG. 23 to the file management information. The file entry 581 is constituted by ADs (application descriptors) 591-1, 591-2, .... Hereinafter, the ADs 591-1, 591-2, ... will simply be referred to as "ADs 591", unless otherwise distinction is particularly required. One AD 591 is recorded for each IL auxiliary area 212 in which the samples 501 of audio data of the audio file 204a are recorded. Each AD 591 contains the starting address and the recording capacity of the recording area of the samples 501 recorded in the corresponding IL auxiliary area 212.

For example, as shown in FIG. 23, when samples 501-1 to 501a of the audio file 204a are recorded in an IL auxiliary area 212-c and samples 501-a+1 to 501-b are recorded in an IL auxiliary area 212-c+1, the starting address and the recording capacity of the area in which the samples 501-1 to 501-a (i.e., the total data amount of the samples 501-1 to 501-a) in the IL auxiliary area 212-c are recorded in the AD 591-1 in the file entry 581 and the starting address and the recording capacity of the area in which the samples 501-a+1 to 501-b (i.e., the total data amount of the samples 501-a+1 to 501-b) in the IL auxiliary area 212-c+1 are recorded in the AD 591-2.

Each time the audio-data recording-area information is obtained, the information manager 152 adds an AD 591 to file entry 581. That is, the file entry 581 is updated each time all samples 501 of audio data to be recorded in one IL auxiliary area 212 are supplied to the drive 136.

Under the control of the recording controller 154, the drive 136 records the audio data in an area indicated by the audio-data recording-area information. When a defective sector is defected during the audio-data recording, the drive 136 supplies the defective-sector information containing the address of the detected defective sector to the area manager 153 and the error detector 155 via the drive interface 135. The drive 136 also supplies the recording-sector information containing the address of a sector in which audio data is recorded to the area manager 153 via the drive interface 135. Based on the recording-sector information and the defective-sector information, the area manager 153 sequentially updates the area map.

The audio data read by the drive interface 135 is deleted from the write buffer 134 (e.g., is logically deleted as a result of a change in the position indicated by a read pointer). Thus, since the audio-data reading speed of the drive interface 135 is higher than the audio-data supplying speed of the audio processor 132, the amount of buffer data begins to decrease.

In step S105, the error detector 155 determines whether or not a recording error occurred. Specifically, based on the defective-sector information, the error detector 155 determines that a recording error occurred, when even one defective sector is detected in the IL auxiliary area 212 in which audio data is recorded. When it is determined that a recording error occurred, the process proceeds to step S106.

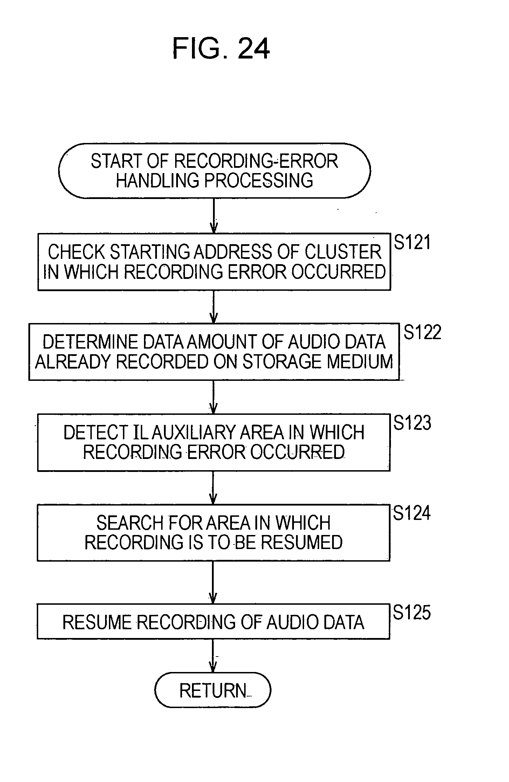

In step S106, the controller 138 performs recording-error handling processing. Specifically, in this processing, which is described below with reference to FIG. 24, a new area in which the audio data for which the recording error occurred can be recorded is searched for, the recording of the audio data at a point when the recording error occurred is resumed, and the audio data is recorded in the newly found area. The audio data is continuously recorded in the IL auxiliary areas 212 subsequent to the IL auxiliary area 212 in which the recording error occurred.

When it is determined in step S105 that no recording error occurred, the processing in step S106 is skipped and the process proceeds to step S107.

In step S107, the recording controller 154 determines whether or not the amount of buffer data is less than or equal to the recording suspension threshold. When it is determined that the amount of buffer data is greater than the recording suspension threshold, the process returns to step S105. The processing in steps S105 to S107 is repeated until it is determined in step S107 that the amount of buffer data is less than or equal to the recording suspension threshold. During the processing, the audio data is recorded on the storage medium 102.

When it is determined in step S107 that the amount of buffer data is less than or equal to the recording suspension threshold, the process proceeds to step S108. In step S108, the recording controller 154 suspends the recording of the audio data. Specifically, the recording controller 154 causes the drive interface 135 to suspend the audio-data reading from the write buffer 134 and causes the drive 136 to suspend the audio-data recording onto the storage medium 102. As a result, the amount of buffer data begins to increase.

Thereafter, the process returns to step S102. Until it is determined in step S102 that a post-recording stop instruction is input, the processing in steps S102 to S108 is repeated, and the audio data is recorded on the storage medium 102.

When it is determined in step S102 that a post-recording stop instruction is input, the process proceeds to step S109. In step S109, regardless of the amount of buffer data, the audio data recording is started in the same manner as the processing in step S104. Upon the input of a post-recording stop instruction, the audio input section 112 stops the supply of audio data to the audio processor 132. As a result, the supply of audio data to the write buffer 134 is stopped.

In step S110, the error detector 155 determines whether or not a recording error occurred, in the same manner as the processing in step S105. When it is determined that a recording error occurred, the process proceeds to step S111, in which recording-error handling processing is performed in the same manner as the processing in step S106.

When it is determined in step S110 that no recording error occurred, the processing in step S111 is skipped and the process proceeds to step S112.

In step S112, the recording controller 154 checks the amount of buffer data in the write buffer 134 to determine whether or not the buffer data stored in the write buffer 134 is exhausted. When it is determined that the buffer data remains, i.e., when audio data that has not been recorded on the storage medium 102 remains, the process returns to step SL10. The processing in -steps S110 to S112 is repeated until it is determined in step S112 that there is no buffer data.

When it is determined in step S112 that there is no buffer data, the process proceeds to step S113. In step S113, the error detector 155 determines whether or not a recording error occurred in the current post-recording processing. When it is determined that a recording error occurred in the current post-recording processing, that is, when it was determined in step S105 or S110 that a recording error occurred and the recording-error handling processing was performed in step S106 or S111, the process proceeds to step S114.

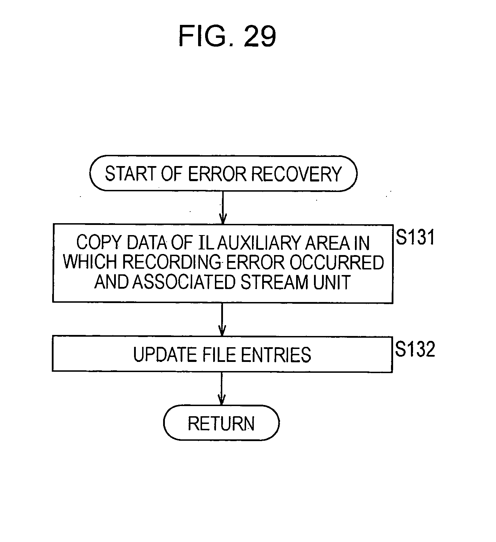

In step S114, the controller 138 performs error recovery processing. In this processing, with respect to the stream unit 211 that has been recorded separately as the result of the occurrence of the recording error, audio data already recorded in the IL auxiliary area 212 in which the recording error occurred is copied to the IL auxiliary area 212 in which audio data was recorded after the occurrence of the recording error, so that the audio data for which the recording error occurred is recorded in one contiguous recording area. Details of the error recovery processing are described below with reference to FIG. 29. Further, data other than the audio data recorded in the IL auxiliary area 212 in which the recording error occurred is also copied to the IL auxiliary area 212 in which the audio data was copied and the stream unit 211 corresponding to the IL auxiliary area 212 in which the recording error occurred is also copied to the contiguous recording area containing the IL auxiliary area 212 to which the audio data was copied.

When it is determined in step S113 that no recording error occurred in the current post-recording processing, the processing in step S114 is skipped and the process proceeds to step S115.

In step S115, the controller 138 performs post-recording completion processing to complete the post-recording processing. Specifically, the recording controller 154 supplies the file management information, the movie information file 241, and the area map to the drive 136 via the drive interface 135 and controls the drive 136 to cause the file management information, the movie information file 241, and the area map to be recorded on the storage medium 102.

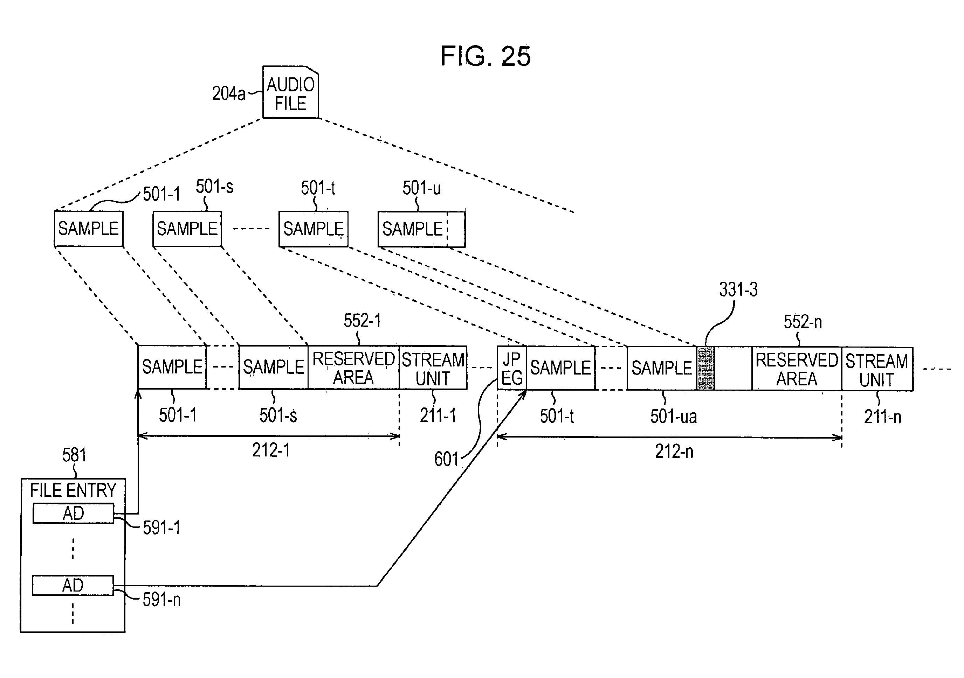

Next, details of the record-error handling processing in step S106 or S111 shown in FIG. 19 will be described with reference to FIG. 24. A description is given of a case in which the recording of audio data is started from an IL auxiliary area 212-1, defective clusters 331-3 are detected during the recording of the audio data in an IL auxiliary area 212-n, and a recording error occurs, as shown in FIG. 25. It is also assumed that samples 501-1 to 501-s of an audio file 204a are recorded from the beginning of the IL auxiliary area 212-1 and a reserved area 552-1 is secured immediately after the sample 501-s. It is further assumed that JPEG data 601 is recorded in the beginning of the IL auxiliary area 212-n, a sample 501-t of the audio file 204a is recorded immediately after the JPEG data 601, a recording error occurs when samples up to a sample 501-ua, which is a portion of a sample 501-u, are recorded.

In step S121, the error detector 155 determines the starting address of clusters in which the recording error occurred. Specifically, based on the area map and the defective-sector information, the error detector 155 searches for clusters containing detected defective sectors, i.e., the defective clusters 331-3, and checks the starting address of the found clusters.

In step S122, the error detector 155 checks the data amount of audio data already recorded on the storage medium 102 (the data amount will hereinafter be referred to as "recorded-audio-data amount"). Specifically, the error detector 155 detects an AD 591 in which audio-data recording-area information containing the starting address of the defective clusters in which the recording error occurred is recorded, the AD 591 being contained in the file entry 581. In the example shown in FIG. 25, an AD 591-n is detected as the AD 591 in which the audio-data recording-area information containing the starting address of the defective clusters in which the recording error occurred is recorded.

Next, the error detector 155 determines the total of the recording capacities recorded in the AD 591-1 to AD 591-(n-1) and the total of the recording capacities from the starting address recorded in the AD 591-n to an address immediately before the defective clusters 331-3, and the determined values are regarded as the recorded-audio-data amount. That is, the determined recorded-audio-data amount is equal to a value obtained by adding the data amount of sample 501-ua, which is a portion of the sample 501-u, to the total data amount of samples 501-1 to 501-(u-1).

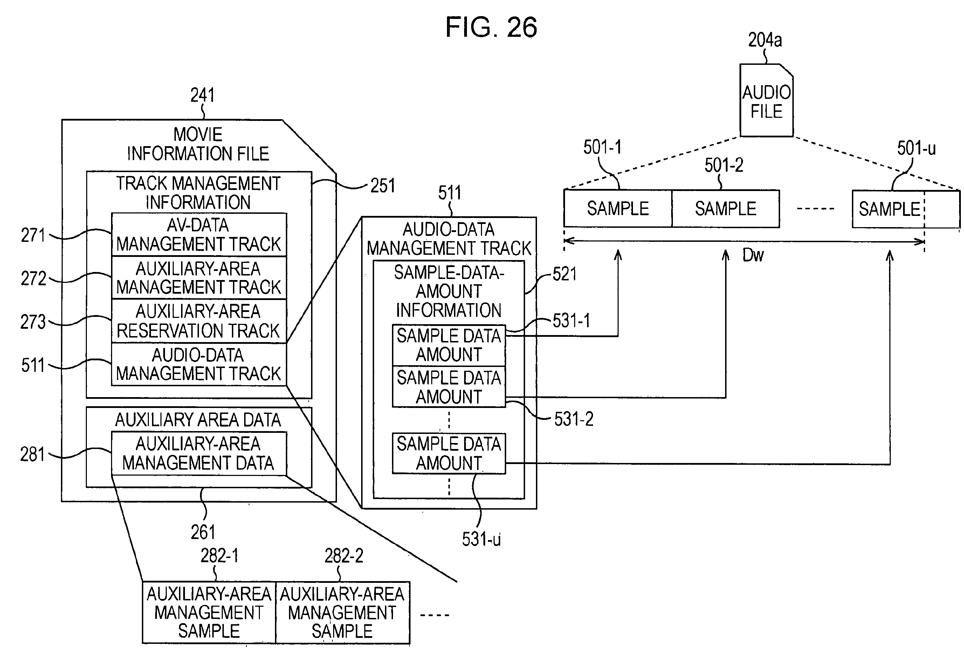

In step S123, the error detector 155 detects the IL auxiliary area 212 in which the recording error occurred. Specifically, first, the error detector 155 detects the sample 501 for which the recording error occurred. The error detector 155 sequentially adds the values of sample data amounts 531 in the audio-data management track 511 of the movie information file 241 shown in FIG. 26 from the first sample data 531-1. The error detector 155 detects, as the sample 501 for which the recording error occurred, as a sample 501 when the total value of the sample data amounts 531 exceeds the recorded-audio-data amount.

When the amount of recorded audio data is indicated by Dw denoted by an arrow in FIG. 26, the total value of the sample data amounts 531 exceeds the amount of recorded audio data Dw, when the sample data amounts 531-1 to 531-u are summed up. Thus, the sample 501 for which the recording error occurred is detected as being the sample 501-u.

Next, the error detector 155 detects the IL auxiliary area 212 in which a portion of the sample 501-u is recorded. Specifically, as described above, information of data sample recorded in IL auxiliary areas is recorded in the auxiliary-area management samples 282. Based on the auxiliary-area management samples 282, the error detector 155 detects the IL auxiliary area 212 containing the sample 501-u and supplies information indicating the detected IL auxiliary area 212 (in which the recording error occurred) to the area manager 153.

In step S124, the area manager 153 searches for an area in which the recording of the sample 501 for which the error occurred is to be resumed. Specifically, based on the file entry 301, the area manager 153 determines the recording capacity of the recording area of a stream unit 211 corresponding to the IL auxiliary area 212 in which the recording error occurred and determines the total of the determined recording capacity of the recording area of the stream unit 211 and the recording capacity of a predetermined IL auxiliary area 212, i.e., the recording capacity of the contiguous recording area in which the recording error occurred. Based on the area map, the area manager 153 searches for a blank area greater than the recording capacity of the determined contiguous recording area and uses the found area as a contiguous recording area in which the recording of the sample 501 for which the recording error occurred is to be resumed (the contiguous recording area will hereinafter be referred to as a "new contiguous recording area").

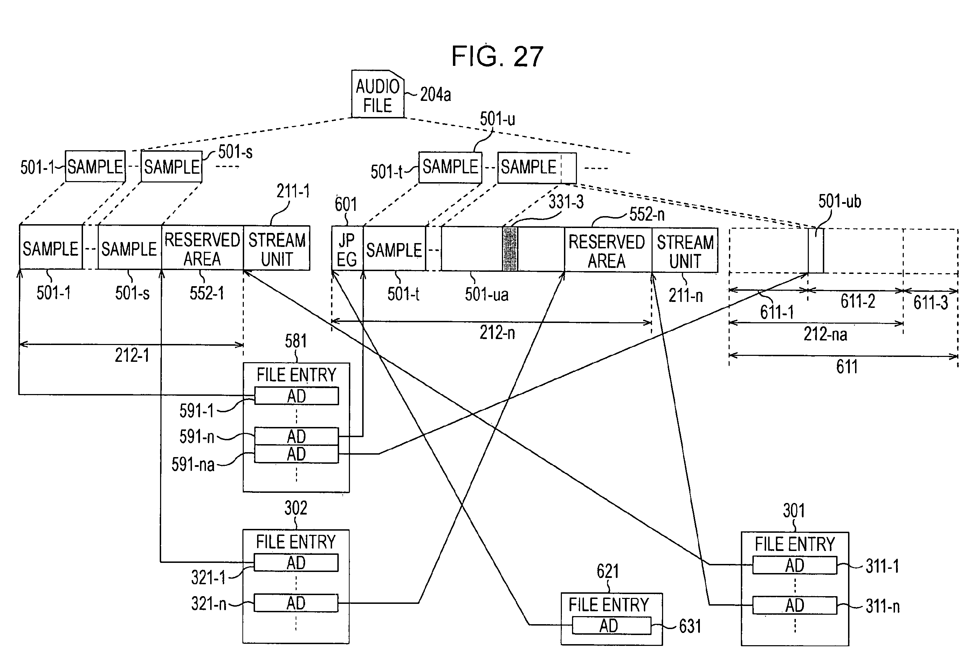

It is assumed below that a new contiguous recording area 611-1 shown in FIG. 27 is found in step S124. It is also assumed in FIG. 27 that an area 611-3 has the same recording capacity as the stream unit 211-n and an IL auxiliary area 212-na has the same recording capacity as the IL auxiliary area 212-n.

In the example shown in FIG. 27, a file entry 621 for the JPEG file 203 containing the JPEG data 601 is registered in the file management information, and an AD (application descriptor) 631 containing the starting address and the recording capacity of the recording area of the JPEG data 601 is contained in the file entry 621.

It is further assumed that the starting address and the recording capacity of the recording area of the stream unit 211 are recorded in the AD 311-1 of the file entry 301 and the starting address and the recording capacity of the recording area of the stream unit 211-n are recorded in the AD 311-n. It is further assumed that the starting address and the recording capacity of the reserved area 552-1 are recorded in the AD 321-1 of the file entry 302 and the starting address and the recording capacity of the recording area of the reserved area 552-n are recorded in the AD 321-n. It is assumed that the starting address and the recording capacity of the area in which the samples 501-1 to 501-s are recorded, the area being located in the IL auxiliary area 212-1, are recorded in the AD 591-1 of the file entry 581, and the starting address and the recording capacity of the area from the starting address of the sample 501-t to an address immediately before the reserved area 552-n, i.e., the starting address and the recording capacity of the area in which the audio data was supposed to be recorded, the area being contained in the IL auxiliary area 212-n, are recorded in the AD 591-n.

In step S125, under the control of the recording controller 154, the drive 136 resumes the recording of the audio data. Specifically, first, the area manager 153 determines a position at which the recording of the audio data is resumed. In the example shown in FIG. 27, the area manager 153 secures, in the beginning of the new contiguous recording area 611, an area 611-1 having the same capacity as the area in which the JPEG data 601 to the sample 501-ua, which is a portion of the sample 501-u, are recorded, the area being located in the auxiliary area 212-n. The area manager 153 then supplies information (hereinafter referred to as "new contiguous-area information") to the information manager 152, the recording controller 154, and the error detector 155. The new contiguous-area information contains the starting address and the recording capacity of the area 611-1; the starting address and the recording capacity of an area 611-2, which is an area excluding the area 611-1 from the beginning of the IL auxiliary area 212-na; and information containing the starting address and the recording capacity of the area 611-3.

Based on the new contiguous-area information, the information manager 152 updates the file entry 581. Specifically, an AD 591-na containing the starting address of the area 611-2 is added to the file entry 581.

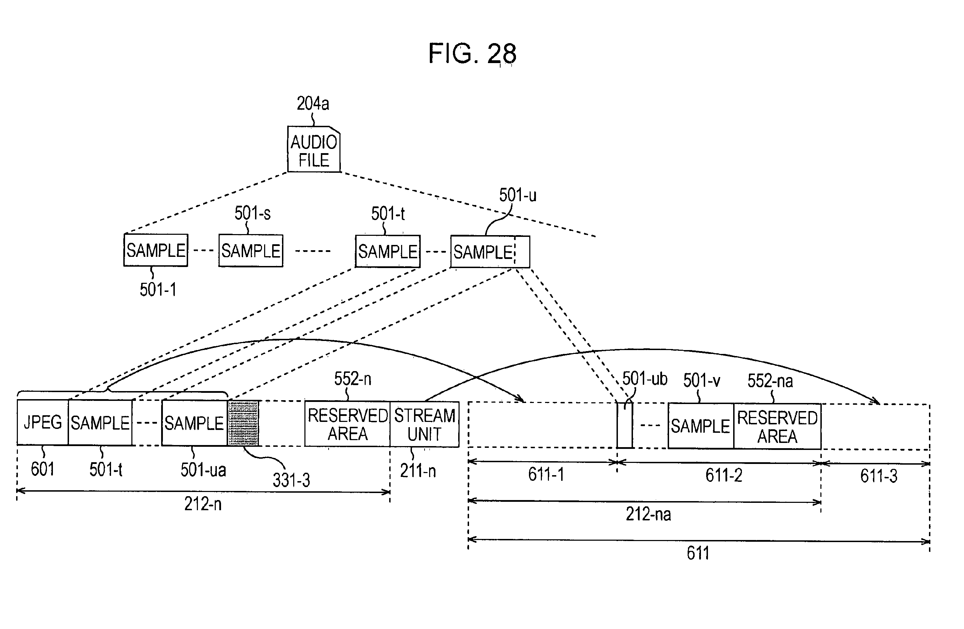

Under the control of the recording controller 154, the drive 136 records a sample 501-ub, which is a portion contained in the sample 501-u to which the recording error occurred and unrecorded on the storage medium 102, from the beginning of the area 611-2. Thereafter, samples 501 subsequent to the sample 501-u are continuously recorded. That is, as shown in FIG. 28, samples 502-ua to 501-v, which are portions of the sample 501-u and are unrecorded in the IL auxiliary area 212-n because of the occurrence of the recording error, are recorded in the area 611-2 in the new contiguous recording area 611, and immediately thereafter, a reserved area 552-na is secured. Subsequently, the audio data is recorded in the IL auxiliary areas 212 after the IL auxiliary area 212-n+1.

Next, details of the error recovery processing in step S114 shown in FIG. 19 will be described with reference to the flow chart shown in FIG. 29.

In step S131, under the control of the recording controller 154, the drive 136 copies the data of the IL auxiliary area 212 in which the recording error occurred and the stream unit 211 associated with the IL auxiliary area 212 in which the recording error occurred to a new contiguous recording area. Specifically, in the example shown in FIG. 28, under the control of the recording controller 154, the drive 136 copies the JPEG data 601 and the samples 501-t to 501-ua, which are recorded in the IL auxiliary area 212-n in which the recording error occurred, to the area 611-1 in the new contiguous recording area 611 and also copies the stream unit 211-n to the area 611-3. Consequently, the data that was supposed to be recorded in the IL auxiliary area 212-n and the stream unit 211-n associated with the IL area 212-n are recorded in the new contiguous recording area 611.

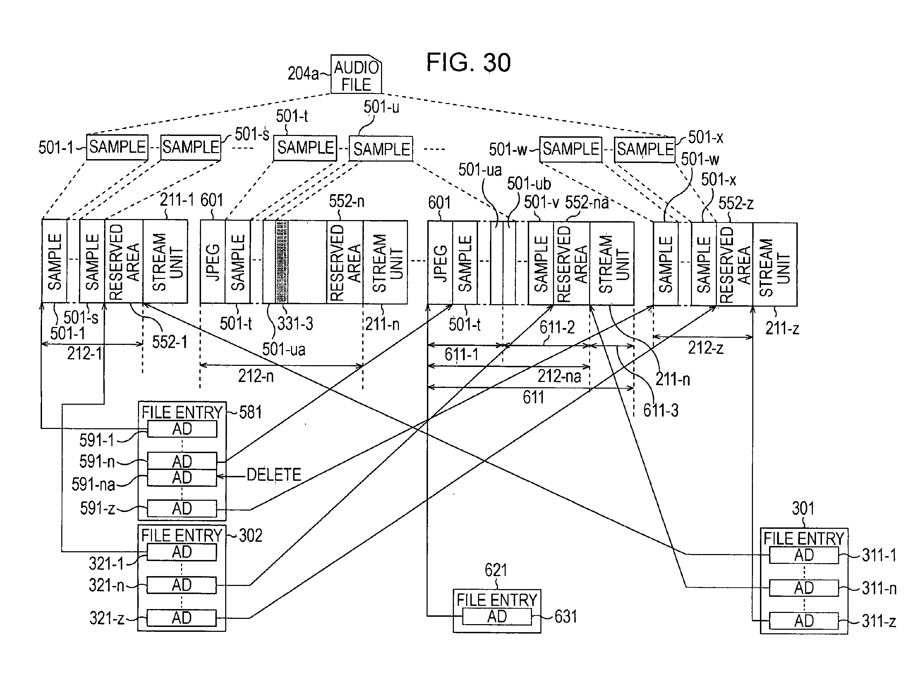

In step S132, the information manager 152 updates the file entries. FIG. 30 is a diagram showing an example of the state of the file entries after the entire audio data is recorded on the storage medium 102 after the recording error shown in FIG. 25 occurred. It is assumed that the stream unit 211-1 to a stream unit 211-z are recorded on the storage medium 102, samples 501-w to 501-x of the audio file 204a are recorded in the IL auxiliary area 212-z from the beginning thereof, and a reserved area 552-z is secured immediately after the sample 501-x.

It is also assumed that ADs 311-1 to 311-z are recorded in the file entry 301, ADs 321-1 to 321-z are recorded in the file entry 302, and ADs 591-1 to 591-z are recorded in the file entry 581. It is also assumed that the starting address of the recording area of the stream unit 211-z is recorded in the AD 311-z, the starting address of the reserved area 552-z in the IL auxiliary area 212-z is recorded in the AD 321-z, and the starting address of the recording area of the samples 501-w to 501-x recorded in the IL auxiliary-area 212-z is recorded in the AD 591-z.

The information manager 152 changes the address of the AD 311-n in the file entry 301 from the starting address of the recording area of the stream unit 211-n to the starting address of the area 611-3 to which the stream unit 211-n was copied. The information manager 152 also changes the address of the AD 321-n in the file entry 302 from the starting address of the reserved area 552-n to the starting address of the reserved area 552-na. The information manager 152 further changes the address of the AD 631 in the file entry 621 from the starting address of the area in which the JPEG data 601 is recorded, the area being located in the IL auxiliary area 212-n, to the area to which the JPEG 601 was copied, the area being located in the IL auxiliary area 212-na.

The information manager 152 also changes the address of the AD 591-n in the file entry 581 from the starting address of the area in which the samples 501-t to 501-ua are recorded, the area being located in the IL auxiliary area 212-n, to the starting address of the area to which the samples 501-t to 501-ua were copied, the area being located in the IL auxiliary area 212-na. The information management unit 152 further deletes the AD 591-na (e.g., turns off a flag indicating whether or not the data is valid). Consequently, in the file management information, the data recorded in the new contiguous recording area 611 becomes valid and the data recorded in the IL auxiliary area 212-n and the stream unit 211-n recorded in the contiguous recording area containing the IL auxiliary area 212-n becomes invalid.

Thus, even when defective clusters are detected in an IL auxiliary area 212 on the storage medium 102 and a recording error occurs, audio data, a stream unit 211 to be played back in synchronization with the audio data, and data previously recorded in the IL auxiliary area 212 are recorded in a contiguous area on the storage medium 102, without occurrence of data loss or interruption of data recording. Based on a change in an area in which data is recorded, the file management information (the file entries 301, 302, 581, and 621) is updated.

Although the real-time post-recording processing has been described in the examples described above, similar recording error processing and error recovery processing can naturally be performed in the edit post-recording processing. In addition, when JPEG data, PNG data, or the like, other than audio data, is recorded, similar recording error processing and error recovery processing can be performed.

As described above, pieces of division data each having a predetermined playback time, the division data being obtained by dividing AV (audio visual) data obtained by multiplexing video data and audio data, are recorded in a first contiguous area of contiguous areas on a data storage medium. During the recording, when the division data becomes unrecordable in the first contiguous area, a second contiguous area, which is a blank area greater than or equal to a recording capacity of the first contiguous area is searched for. Further, the recording of the division data into the second contiguous area is controlled so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area. In this case, data for a predetermined playback time can be recorded in a contigous area on the data storage medium. Even -when an area in which data cannot be recorded exists on the data storage medium, data for a predetermined playback time can be recorded in a contiguous area on the data storage medium, without interruption of data recording or occurrence of data loss.

In addition, pieces of division data each having a predetermined playback time, the division data being obtained by dividing AV (audio visual) data obtained by multiplexing video data and audio data, are recorded in contiguous areas on a data storage medium and, for each contiguous area, a content-data recording area having a predetermined recording capacity for additionally recording the content data is secured adjacent to the contiguous area, the content data being played back in synchronization with playback of the division data recorded in the contiguous area. When the content data to be played back in synchronization with the playback of the division data recorded in a first contiguous area of the contiguous areas becomes unrecordable in the first content-data recording area, a second contiguous area and a second content-data recording area are searched for. The second contiguous area is a blank area greater than or equal to a recording capacity of the first contiguous area, and a second content-data recording area is a blank area adjacent to the second contiguous area and greater than or equal to a recording capacity of the first content-data recording area. Further, the recording of the division data into the second contiguous area and the recording of the content data into the second content-data recording area are controlled so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area. In this case, data for a predetermined playback time can be recorded in a contigous area on the data storage medium. Even when an area in which data cannot be recorded exists on the data storage medium, data for a predetermined playback time can be recorded in a contiguous area on the data storage medium, without interruption of data recording or occurrence of data loss.

The present invention is applicable to recording apparatuses, such as video cameras.

The recording/playback apparatus 101 can also be designed specifically for recording AV data, without the provision of the video display section 114, the audio playback section 115, and the data playback section 137. In addition, the recording/playback apparatus 101 can be designed specifically for post-recording, without the provision of the video input section 111, the video processor 131, and the multiplexer 133.

The above described series of processing can be executed by hardware and can also be executed by software. When the series of processing is executed by software, a program for implementing the software is installed from a network or a storage medium onto, for example, a computer incorporated into dedicated hardware or a general-purpose personal computer that can execute various functions through installation of various programs.

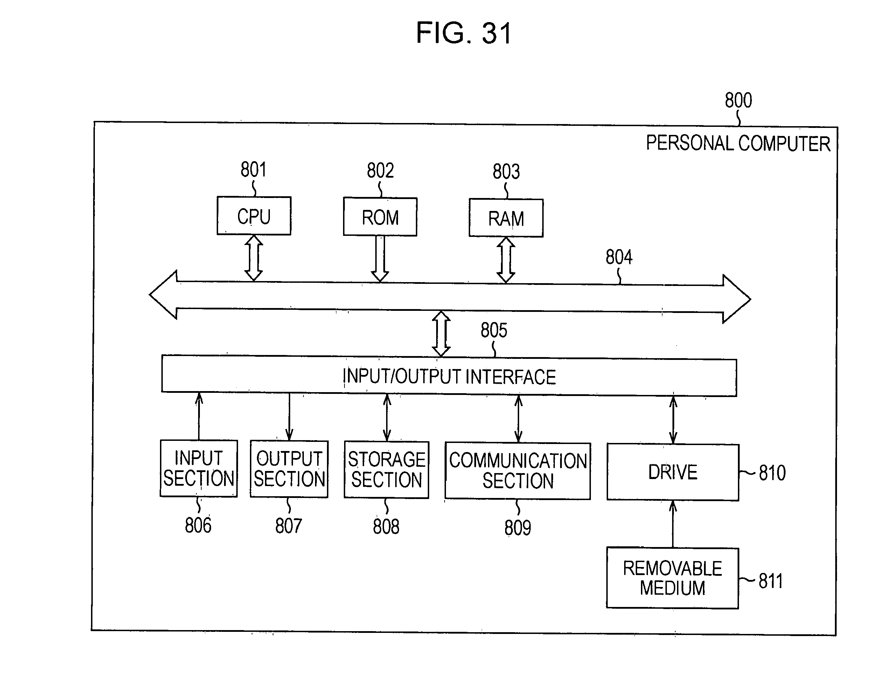

FIG. 31 is a diagram showing an example of the internal configuration of a general-purpose personal computer 800. A CPU (central processing unit) 801 executes various types of processing in accordance with a program stored in a ROM (read only memory) 802 or a program loaded from a storage section 808 into a RAM (random access memory) 803. As needed, the RAM 803 also stores, for example, data required for the CPU 801 to execute various types of processing.

The CPU 801, the ROM 802, and the RAM 803 are interconnected through a bus 804. An input/output interface 804 is also connected to the bus 805.

An input section 806, which includes buttons, switches, and a keyboard or a mouse; a display, such as a CRT (cathode ray tube) or an LCD (liquid crystal display); an output section 807, which includes speakers or the like; the storage section 808, which includes a hard disk or the like; and a communication section 809, which includes a mode, terminal adapter, or the like, are connected to the input/output interface 805. The communication section 809 performs communication processing through networks, including the Internet.

A drive 810 is also connected to the input/output interface 805, as needed, and, for example, a removal medium 811, which is implemented with, a magnetic disk, an optical disk, a magneto-optical disk, a semiconductor memory, or the like, is attached to the drive 810, as appropriate. A computer program read from the medium is installed on the storage section 808.

The storage medium for recording the program that is installed on the computer and that is put into an executable state by the computer is not only implemented with the removable medium 811, distributed to provide a user with the program, but also is implemented with, for example, the ROM 803 in which the program is stored or the hard disk included in the storage section 808, the ROM 803 and the hard disk being supplied to a user in a state pre-incorporated into the main unit of the apparatus. As shown in FIG. 31, examples of the removable medium 811 include a magnetic disk (including a flexible disk), an optical disk (including a CD-ROM (compact disk - read only memory) or a DVD (digital versatile disk)), a magneto-optical disk (including an MD (mini-disk) (registered trademark)), or a semiconductor memory in which the program is recorded.

Herein, the steps for describing the program to be stored in the program storage medium not only include processing that is time-sequentially performed according to the described sequence but also include processing that is concurrently or independently executed without being necessarily time-sequentially performed.

## Claims

1. A recording apparatus for recording pieces of division data each having a predetermined playback time, the division data being obtained by dividing AV (audio visual) data obtained by multiplexing video data and audio data, in contiguous areas on a data storage medium, the recording apparatus comprising:
searching means for searching for, when the division data is being recorded in a first contiguous area of the contiguous areas and the division data becomes unrecordable in the first contiguous area, a second contiguous area, which is a blank area greater than or equal to a recording capacity of the first contiguous area; and
recording controlling means for controlling recording of the division data into the second contiguous area so that a third contiguous area having a recording capacity equal to a data amount of first data contained in the division data and recorded in the first contiguous area is secured in the beginning of the second contiguous area, second data-contained in the division data and unrecorded in the first contiguous area is recorded immediately after the third contiguous area, and the first data is then recorded in the third contiguous area.

2. The recording apparatus according to claim 1, further comprising information generating means for generating area information containing positions and recording capacities of the contiguous areas and for updating the position and the recording capacity of the first contiguous area, the position and recording capacity being contained in the area information, to the position and the recording capacity of the second contiguous area, when the division data is recorded in the second contiguous area.

3. The recording apparatus according to claim 1, wherein the data storage medium is a data storage medium on which, for each contiguous area, a content-data recording area for additionally recording content data to be played back in synchronization with playback of the division data recorded in the contiguous area- is secured adjacent to the contiguous area, the content-data recording area having a predetermined recording capacity;
the searching means searches for, when the content data to be played back in synchronization with the playback of the division data recorded in a forth contiguous area of the contiguous areas is being recorded in a first content-data recording area of the content-data recording areas and the content data becomes unrecordable in the first content-data recording area, a fifth contiguous area, which is a blank area greater than or equal to a recording capacity of the fourth contiguous area, and a second content-data recording area, which is a blank area adjacent to the fifth contiguous area and greater than or equal to a recording capacity of the first content-data recording area; and
the recording controlling means controls recording of the division data into the fifth contiguous area and recording of the content data into the second content-data recording area so that a third content-data recording area having a recording capacity equal to a data amount of third data contained in the content data and recorded in the first content-data recording area is secured in the beginning of the second content-data recording area, fourth data contained in the content data and unrecorded in the first content-data recording area is recorded immediately after the third content-data recording area, the third data is then recorded in the third content-data recording area, and the division data recorded in the fourth contiguous area is recorded in the fifth contiguous area.

4. The recording apparatus according to claim 3, further comprising information generating means for generating area information containing positions and recording capacities of the contiguous areas and the content-data recording areas and for updating, when the division data is recorded in the fifth contiguous area and the content data is recorded in the second content-data recording area, the positions and the recording capacities of the forth contiguous area and the first content-data recording area, the positions and the recording capacities being contained in the area information, to the positions and the recording capacities of the fifth contiguous area and the second content-data recording area.

5. A recording method for recording pieces of division data each having a predetermined playback time, the division data being obtained by dividing AV (audio visual) data obtained by multiplexing video data and audio data, in contiguous areas on a data storage medium, the recording method comprising:
a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and
a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

6. A storage medium that stores a computer-readable recording-processing program for recording pieces of division data each having a predetermined playback time, the division data being obtained by dividing AV (audio visual) data obtained by multiplexing video data and audio data, in contiguous areas on a data storage medium, the program comprising:
a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and
a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

7. A program for causing a computer to perform recording processing for recording pieces of division data each having a predetermined playback time, the division data being obtained by dividing AV (audio visual) data obtained by multiplexing video data and audio data, in contiguous areas on a data storage medium, the program comprising:
a searching step of searching for, when the division data is being recorded in a first contiguous area of the contiguous areas and the division data becomes unrecordable in the first contiguous area, a second contiguous area, which is a blank area greater than or equal to a recording capacity of the first contiguous area; and
a recording controlling step of controlling recording of the division data into the second contiguous area so that a third contiguous area having a recording capacity equal to a data amount of first data contained in the division data and recorded in the first contiguous area is secured in the beginning of the second contiguous area, second data contained in the division data and unrecorded in the first contiguous area is recorded immediately after the third contiguous area, and the first data is then recorded in the third contiguous area.

8. A recording apparatus that records content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area, the recording apparatus comprising:
searching means for searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and
recording controlling means for controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

9. The recording apparatus according to claim 8, further comprising information generating means for generating area information containing positions and recording capacities of the contiguous areas and the content-data recording areas and for updating the positions and the recording capacities of the first contiguous area and the first content-data recording area, the positions and the recording capacities being contained in the area information, to the positions and the recording capacities of the second contiguous area and the second content-data recording area, when the division data is recorded in the second contiguous area and the content data is recorded in the second content-data recording area.

10. A recording method for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area, the recording method comprising:
a searching step of searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and
a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

11. A storage medium that stores a computer-readable recording-processing program for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area, the program comprising:
a searching step of searching for, when the content data to be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and
a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.

12. A program for causing a computer to perform recording processing for recording content data on a data storage medium on which pieces of division data each having a predetermined playback time, the division data being obtained by dividing AV (audio visual) data obtained by multiplexing video data and audio data, are recorded in contiguous areas and, for each contiguous area, a content-data recording area having a predetermined recording capacity for additionally recording the content data is secured adjacent to the contiguous area, the content data being played back in synchronization with playback of the division data recorded in the contiguous area, the program comprising:
a -searching step of searching for, when the content data to-be played back in synchronization with the playback of the division data recorded in a first contiguous area of the contiguous areas is being recorded in a first content-data recording area of the content-data recording areas and the content data becomes unrecordable in the first content-data recording area, a second contiguous area, which is a blank area greater than or equal to a recording capacity of the first contiguous area, and a second content-data recording area, which is a blank area adjacent to the second contiguous area and greater than or equal to a recording capacity of the first content-data recording area; and
a recording controlling step of controlling recording of the division data into the second contiguous area and recording of the content data into the second content-data recording area so that a third content-data recording area having a recording capacity equal to a data amount of first data contained in the content data and recorded in the first content-data recording area is secured in the beginning of the second content-data recording area, second data contained in the content data and unrecorded in the first content-data recording area is recorded immediately after the third content-data recording area, the first data is then recorded in the third content-data recording area, and the division data recorded in the first contiguous area is recorded in the second contiguous area.
